(19) **Europäisches Patentamt** / **European Patent Office** / **Office européen des brevets**

(11) **EP 4 459 353 B1**

(12) **EUROPEAN PATENT SPECIFICATION**

(45) Date of publication and mention
of the grant of the patent:
**29.07.2026 Bulletin 2026/31**

(21) Application number: **23856088.2**

(22) Date of filing: **17.04.2023**

(51) International Patent Classification (IPC):
*G02B 17/08* (2006.01)    *G02B 5/00* (2006.01)
*G02B 27/00* (2006.01)    *G03B 17/17* (2021.01)
*G03B 30/00* (2021.01)

(52) Cooperative Patent Classification (CPC):
**G02B 17/0808; G02B 5/003; G02B 17/0856;
G02B 27/0018; G03B 17/17; G03B 30/00**

(86) International application number:
**PCT/CN2023/088787**

(87) International publication number:
**WO 2024/040993 (29.02.2024 Gazette 2024/09)**

(54) **CAMERA LENS, CAMERA MODULE AND ELECTRONIC DEVICE**

KAMERAOBJEKTIV, KAMERAMODUL UND ELEKTRONISCHE VORRICHTUNG

LENTILLE DE CAMÉRA, MODULE DE CAMÉRA ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.08.2022 CN 202211009673**

(43) Date of publication of application:
**06.11.2024 Bulletin 2024/45**

(73) Proprietor: **Honor Device Co., Ltd.
Shenzhen, Guangdong 518040 (CN)**

(72) Inventors:
• **WANG, Xinquan
Shenzhen, Guangdong 518040 (CN)**
• **WU, Bin
Shenzhen, Guangdong 518040 (CN)**

(74) Representative: **Gill Jennings & Every LLP
The Broadgate Tower
20 Primrose Street
London EC2A 2ES (GB)**

(56) References cited:
**WO-A1-2021/261615        WO-A1-2021/261615
CN-A- 108 254 859        CN-A- 113 740 999
CN-A- 113 960 757        CN-A- 114 488 486
JP-A- H11 174 331        JP-A- H11 174 331
US-A- 3 700 310        US-A1- 2016 187 631**

• **WARREN J SMITH ED - WARREN J SMITH:
"Excerpt. "Scaling a Design, Its Aberrations, and
Its MTF"", 1 January 1992, OPTICAL AND
ELECTRO-OPTICAL ENGINEERING
SERIES(OPTICS TOOLBOX); [OPTICAL AND
ELECTRO-OPTICAL ENGINEERING SERIES], MC
GRAW-HILL, NEW YORK, PAGE(S) 57 - 58, ISBN:
978-0-07-059178-3, XP007908443**

## Description

This application claims priority to Chinese Patent Application No. 202211009673.4, filed with the China National Intellectual Property Administration on August 22, 2022 and entitled "LENS, CAMERA MODULE, AND ELECTRONIC DEVICE".

## TECHNICAL FIELD

This application relates to the field of optical imaging technologies, and in particular, to a lens, a camera module, and an electronic device.

## BACKGROUND

With development of electronic devices, an update speed of the electronic devices becomes faster, and hardware configuration is continuously improved. In addition, a quantity of cameras configured on the electronic device also increases.

A long-focus lens has a function similar to that of a telescope, and can be used to photograph distant objects. A framing range of the long-focus lens is far smaller than a range reached by a naked eye (a smaller field of view), to facilitate long-distance snapping. Electronic devices with a long-focus photographing function are increasingly favored. As the quantity of cameras on the electronic device increases, a camera module including a long-focus lens is more widely applied to the electronic device. However, the long-focus lens often has a multi-zoom function and has a large volume, while the market has an increasingly high requirement for miniaturization of the electronic device. An overall size of the camera module mounted in the electronic device should not be excessively large. When the requirement for a miniaturization design of the camera module is met, the telephoto capability and an imaging effect of the camera module are greatly limited. Therefore, how to meet the requirement for the miniaturization design of the camera module, also improve the telephoto capability of the camera module and obtain high-quality imaging, and further reduce lens processing difficulty becomes a problem urgently to be resolved.

JPH11174331A discloses a meniscus lens which has one surface made concave and its opposite surface made convex is used as the reflecting and refracting optical lens. A first reflecting surface is formed on the convex surface of this meniscus lens and a second reflecting surface is formed on the concave surface. On the remaining surfaces of those concave and convex surfaces where the reflecting surfaces are not formed, a 1st refracting surface is formed on the concave surface side and a second refracting surface is formed on the convex surface side. At this time, those concave and convex surfaces are so formed that the ratio of the radii of curvature of those concave and convex surfaces is 0.8 to 1.2. Thus, the reflecting and refracting optical lens is formed of such surfaces of curvature that the ratio (R2 /R1 ) of the radii of curvature of the convex surface and concave surface is 0.8 to 1.2, so that no chromatic aberration is generated.

WO2021261615A1 discloses an imaging lens, and a camera module and an electronic device comprising same. An imaging lens according to one example comprises: a catadioptric lens through which light is incident from an object side and from which the light exits by being reflected from the inside thereof; and a lens group including a plurality of lenses that transmit the light emitted from the catadioptric lens to an image plane, wherein the catadioptric lens comprises: an incident surface on which the light is incident from the object side; a second mirror surface that is concave toward the object side and reflects the light incident from the incident surface to a first mirror surface of the object side; the first mirror surface that is convex toward the image plane in the central portion of the incident surface and reflects the light reflected from the second mirror surface toward the image side; and an exit surface through which the light reflected from the first mirror surface exits, and wherein the lens group may be disposed between the first mirror surface and the second mirror surface with respect to an optical axis. Accordingly, it is possible to increase the brightness of the lens, increase the resolution, suppress an increase in thickness, and reduce an assembly tolerance of a mirror.

CN108254859A discloses a catadioptric optical system and an image pickup apparatus. A thin catadioptric optical system having a prescribed imaging performance, and a bright and long focal length with a small low back factor is provided. A catadioptric optical system and an imaging pickup device including the catadioptric optical system are provided. The catadioptric optical system is a coaxial birefringent optical system, and has a first lens and a second lens which are arranged at an air interval from an object side; a first refractive surface is formed in a peripheral region of a surface on the object side of the first lens; a second reflecting surface is formed in a central region of the surface on the object side of the first lens; a first reflecting surface is formed in the peripheral region of a surface on an imaging side of the second lens; the second refractive surface is formed in a central region of the surface on the imaging side of the second lens; and predetermined conditions related to the effective diameters of the first reflecting surface and the second reflecting surface are satisfied.

US3700310A discloses a highly corrected compact optical system which has a large telephoto ratio, and which is particularly adapted for a photographic objective, that is provided by a catadioptric system consisting of a solid refractive support which has a portion of smaller diameter projecting from its forward end and internal reflecting surfaces on its opposite end. An annular convergent reflecting surface on the rear end of the support reflects incoming light back through the support to a circular divergent reflecting surface which is on the forward end of the forwardly projecting portion and which reflects the light back through the opening at the center of the annular reflecting surface where a series of lenses are suitably provided for increasing the focal length of the system and correcting for some aberrations. Light enters the system through an afocal doublet at the front of the system consisting of a positive lens in front of a negative lens with an air space between; this doublet has an axial aperture through it and is positioned at the front of the support, around the forwardly projecting portion. The positive lens and the support are both of the same material which has substantially the same dispersive power as the material of the negative lens but a much lower (about 17 percent lower) refractive index, so that apochromatism is achieved with rather shallow spherical surfaces, which avoid zonal spherical aberration and the need for aspheric surfaces.

## SUMMARY

The invention is defined by the appended claims. Embodiments of this application provide a lens, a camera module, and an electronic device, to resolve a problem of how to ensure a telephoto capability of a lens, also implement a miniaturization design of the lens, and reduce lens processing difficulty.

To achieve the foregoing objective, the following technical solutions are used in embodiments of this application.

According to a first aspect, this application provides a lens as set out in appended claim 1.

In the lens in this embodiment of this application, the first refracting surface, the second refracting surface, the first reflecting surface, and the second reflecting surface are disposed on the first lens. Incident light from an object side enters the first lens through the first refracting surface, is received by the first reflecting surface and reflected to the second reflecting surface, then is received by the second reflecting surface and reflected to the second refracting surface, and is emitted from the first lens after being refracted by the second refracting surface. In this way, four times of adjustment of light and two times of reflection on an optical path can be implemented by using the first lens. No additional reflecting element needs to be disposed. Therefore, a focal length of the lens can be increased, a dimension of the lens in a direction of the optical axis can be reduced, and a total length of the lens can be reduced, to help implement a requirement for a miniaturization design of the lens.

In addition, in the lens in this embodiment of this application, the first refracting surface and the second reflecting surface are smoothly transitionally connected through the first transition surface. For example, the first transition surface is an arc-shaped surface. In this way, sharp protrusions or undesirable protrusions can be avoided between the first refracting surface and the second reflecting surface. Specifically, sharp protrusions or undesirable protrusions or the like can be avoided at a connection position between the first refracting surface and the first transition surface, a surface of the first transition surface, and a connection position between the first transition surface and the second reflecting surface. Therefore, uniformity of the light-shielding layer can be ensured, adhesion of the light-shielding layer to the first transition surface can be improved, and the light-shielding layer can be prevented from falling off, to further ensure a light-shielding effect of the light-shielding layer and reduce processing difficulty of the light-shielding layer, thereby reducing lens processing difficulty and improving a lens processing yield.

In a possible implementation of the first aspect, the second reflecting surface is located in a middle region of the object-side surface, and the first refracting surface surrounds an outer circumference of the second reflecting surface. In this way, an area of the first refracting surface can be increased, to help expand a field of view of the first lens and increase an amount of incident light of the first lens.

In a possible implementation of the first aspect, an intersection point between the optical axis and a surface at which the first refracting surface is located is located on a side that is of the second reflecting surface and that is opposite to the second refracting surface. In this way, the second reflecting surface can be prevented from protruding from the first refracting surface, to help implement a smooth transitional connection between the first refracting surface and the second reflecting surface and improve appearance aesthetics of the first lens.

In the first aspect, the second reflecting surface is located in the middle region of the object-side surface. The first refracting surface surrounds the outer circumference of the second reflecting surface. An orthographic projection of the first transition surface on a reference plane is a first projection. The first projection is annular. An orthographic projection of the second reflecting surface on the reference plane is a second projection. A ratio of an annular band width of the first projection to a radius of the second projection is less than or equal to 0.1. The reference plane is perpendicular to the optical axis of the lens. The annular band width of the first projection is a difference between an outside diameter and an inside diameter of the first projection. In this way, the annular band width of the first projection is set to not greater than one tenth of the radius of the second projection, to reduce stray light and ensure areas of the first refracting surface and the second reflecting surface, thereby further ensuring a reception area of incident light and a reflection area in a second time of reflection and improving imaging quality of the lens.

In a possible implementation of the first aspect, a reflective film is disposed at the second reflecting surface. The light-shielding layer is disposed on a side that is of the reflective film and that is opposite to the second refracting surface. In this way, a color of the first transition surface can be consistent with a color of the second reflecting surface, to further improve appearance aesthetics of the first lens. In addition, a setting area of the light-shielding layer can be increased, and processing precision of the light-shielding layer can be reduced, to reduce processing difficulty of the light-shielding layer and improve a processing yield of the first lens.

In a possible implementation of the first aspect, the second reflecting surface is located in the middle region of the object-side surface. The first refracting surface surrounds the outer circumference of the second reflecting surface. The orthographic projection of the first transition surface on the reference plane is the first projection. An orthographic projection of the first refracting surface on the reference plane is a third projection. A ratio of an outside diameter of the first projection to an outside diameter of the third projection is greater than or equal to 0.3 and less than or equal to 0.5. The reference plane is perpendicular to the optical axis of the lens. In this way, processing difficulty of the first lens and an appearance of the first lens can be both considered.

In the first aspect, an outside diameter of the first lens is greater than or equal to 8 mm and less than or equal to 15 mm. In this way, the reception area of the incident light of the first lens and the reflection area in the second time of reflection can be ensured, to help improve imaging quality of the lens. In addition, an overall volume of the first lens can be reduced, and processing difficulty of the first lens can be reduced, to help molding and processing of the first lens, thereby improving a molding and processing yield of the first lens.

In a possible implementation of the first aspect, an edge thickness of the first lens is greater than or equal to 0.5 mm and less than or equal to 1.2 mm. Therefore, it is convenient to assemble the first lens and the lens barrel, which helps reduce an overall thickness of the lens, reduce a volume of the lens, and implement a miniaturization design of the lens. This further helps reduce thicknesses of a camera module and an electronic device. In addition, a photographing effect and a lightness design of the electronic device are both considered.

In a possible implementation of the first aspect, the first reflecting surface and the second refracting surface are coplanar. In this way, a processing technology of the first lens can be simplified, and structural precision of the first lens can be improved, to improve a photographing effect of the lens.

In a possible implementation of the first aspect, a central thickness of the first lens is greater than or equal to 1.5 mm and less than or equal to 2.5 mm. In this way, when the overall thickness of the first lens is reduced, the processing difficulty of the first lens can be reduced, to help molding and processing of the first lens, thereby improving a molding and processing yield of the first lens.

In a possible implementation of the first aspect, a recessed part recessed toward the object-side surface of the first lens is disposed at the image-side surface of the first lens. The second refracting surface is formed on a bottom wall of the recessed part. In this way, when light is reflected for a plurality of times in the first lens, a structure of the lens is more compact, to help further reduce a size of the lens and implement a miniaturization design of the lens.

In a possible implementation of the first aspect, a central thickness of the first lens is greater than or equal to 1 mm and less than or equal to 2 mm. In this way, when the overall thickness of the first lens is reduced, the processing difficulty of the first lens can be reduced, to help molding and processing of the first lens, thereby improving a molding and processing yield of the first lens.

In a possible implementation of the first aspect, a ratio of the central thickness of the first lens to the outside diameter of the first lens is greater than 0.1. In this way, this helps implement molding and processing of the first lens and increase a molding or processing yield of the first lens.

In a possible implementation of the first aspect, the lens further includes a second lens group. The second lens group is located on a side that faces the image-side surface of the first lens. A surface that is of the second lens group and that is opposite to the first lens is located on a side that is of the first reflecting surface and that is opposite to the second reflecting surface. In this way, the overall thickness of the first lens can be reduced, and processing difficulty and assembling difficulty of the lens can be reduced.

In a possible implementation of the first aspect, a part of a lens that is in the second lens group and that is closest to the first lens is located in the recessed part. Specifically, the lens that is in the second lens group and that is closest to the first lens is a second lens, and a part of an outer edge of the second lens is located outside the recessed part. In this way, this helps fasten the second lens to an inner wall surface of the lens barrel.

In a possible implementation of the first aspect, the first reflecting surface is connected to the second refracting surface through a second transition surface. A light-shielding structure is disposed at the second transition surface.

In a possible implementation of the first aspect, a focal length of the first lens is LEF1, a focal length of the second lens group is LEF2, and an effective focal length of the lens is f. A ratio of LEF1 to LEF2 is greater than -5.5 and less than -2. In this way, the lens can have a good long-focus characteristic and good imaging quality. In addition, the total length of the lens can be reduced to implement miniaturization of the lens, to help implement miniaturization of a camera module and an electronic device.

In a possible implementation of the first aspect, a ratio of LEF1 to f is greater than 0.35 and less than 0.6. In this way, this helps properly distribute focal powers to adjust an optical path, so that an optical path outside a field of view can be effectively prevented from reaching the image plane, to avoid adverse impact on imaging performance of the lens and effectively improve imaging quality of the lens.

In a possible implementation of the first aspect, a ratio of LEF2 to f is greater than - 0.25 and less than 0. In this way, this also helps properly distribute focal powers to adjust an optical path, so that an optical path outside a field of view can be effectively prevented from reaching the image plane, to avoid adverse impact on imaging performance of the lens and effectively improve imaging quality of the lens.

In a possible implementation of the first aspect, the lens has an image plane, a distance from the object-side surface of the first lens to the image plane on the optical axis is TTL, the effective focal length of the lens is f, and a ratio of TTL to f is greater than or equal to 0.3 and less than or equal to 0.5. In this way, when the lens has a good long-focus characteristic, the total length of the lens can be reduced to implement miniaturization of the lens, to help implement miniaturization of a camera module and an electronic device.

In a possible implementation of the first aspect, the effective focal length of the lens is f, an entrance pupil diameter of the lens is EPD, and a ratio of f to EPD is less than or equal to 3. In this way, when the long-focus characteristic of the lens is ensured, a light passing amount of the lens can be increased, and imaging performance of the lens can be improved, so that a clear imaging effect can still be achieved when the lens performs photographing in a relatively dark environment.

In a possible implementation of the first aspect, the lens has the image plane, a radius of a maximum image circle of the lens is Imgh, a distance from the object-side surface of the first lens to the image plane on the optical axis is TTL, and a ratio of Imgh to TTL is greater than 0.1. In this way, when an overall size of the lens is reduced, pixels of the lens can be ensured, so that a miniaturization design of the lens and a high-resolution image can be both considered.

In a possible implementation of the first aspect, the radius of the maximum image circle of the lens is Imgh, the outside diameter of the first lens is D, and a ratio of Imgh to D is greater than 0.2. In this way, when the overall size of the lens is reduced, pixels of the lens can be ensured, so that the miniaturization design of the lens and the high-resolution image can be both considered.

In a possible implementation of the first aspect, the lens further includes a lens barrel. The first lens and the second lens group are separately fastened to an inner wall surface of the lens barrel. Therefore, the first lens and the second lens group are separately fastened in the lens barrel, to reduce assembling difficulty of the first lens and the second lens group and improve assembling efficiency.

In a possible implementation of the first aspect, the lens barrel includes a first part and a second part that are connected to each other. The first part includes a first accommodating cavity. The second part includes a second accommodating cavity. The first accommodating cavity communicates with the second accommodating cavity. The first lens is fastened to an inner wall surface of the first accommodating cavity. The second lens group is fastened to an inner wall surface of the second accommodating cavity.

BRIEF DESCRIPTION OF DRAWINGS

FIG. 1 is a three-dimensional diagram of an electronic device according to some embodiments of this application;

FIG. 2 is an exploded diagram of the electronic device shown in FIG. 1;

FIG. 3 is a diagram of a structure of a camera module according to some embodiments of this application;

FIG. 4 is an internal circuit diagram of the electronic device shown in FIG. 1 and FIG. 2;

FIG. 5 is a diagram of a structure of a lens according to some related technologies of this application;

FIG. 6 is a diagram of a lens according to some embodiments of this application;

FIG. 7 is a three-dimensional diagram of a first lens in the lens shown in FIG. 6;

FIG. 8 is a diagram of an orthographic projection of an object-side surface of the first lens shown in FIG. 7 on a reference plane;

FIG. 9 is a three-dimensional diagram of a first lens according to some other embodiments of this application;

FIG. 10 is a diagram of a structure of a lens according to some other embodiments of this application;

FIG. 11 is a diagram of a lens according to some still other embodiments of this application;

FIG. 12 is a diagram of a structure of a lens according to some embodiments of this application;

FIG. 13 is a field curvature diagram of the lens shown in FIG. 12;

FIG. 14 is a distortion diagram of the lens shown in FIG. 12;

FIG. 15 is a diagram of a structure of a lens according to some other embodiments of this application;

FIG. 16 is a field curvature diagram of the lens shown in FIG. 15;

FIG. 17 is a distortion diagram of the lens shown in FIG. 15;

FIG. 18 is a diagram of a structure of a lens according to some still other embodiments of this application;

FIG. 19 is a field curvature diagram of the lens shown in FIG. 18;

FIG. 20 is a distortion diagram of the lens shown in FIG. 18;

FIG. 21 is a diagram of a structure of a lens according to some still other embodiments of this application;

FIG. 22 is a field curvature diagram of the lens shown in FIG. 21;

FIG. 23 is a distortion diagram of the lens shown in FIG. 21;

FIG. 24 is a diagram of a structure of a lens according to some still other embodiments of this application;

FIG. 25 is a field curvature diagram of the lens shown in FIG. 24;

FIG. 26 is a distortion diagram of the lens shown in FIG. 24;

FIG. 27 is a diagram of a structure of a lens according to some still other embodiments of this application;

FIG. 28 is a field curvature diagram of the lens shown in FIG. 27; and

FIG. 29 is a distortion diagram of the lens shown in FIG. 27.

Reference numerals:

100: electronic device;
10: screen; 11: transparent cover plate; 12: display; 20: back housing; 21: back cover; 22: frame; 23: middle plate; 30: camera module; 31: lens; 31a: light incident surface; 31b: light exit surface; 32: photosensitive chip; 311: first lens; 311a: first refracting surface; 311b: second refracting surface; 311c: first reflecting surface; 311d: second reflecting surface; 311e: first transition surface: 311f: recessed part; 311g: second transition surface; 33: light-shielding layer; 34: light-shielding structure; F1: first prism; 312: second lens group; 312a: second lens; 312b: third lens; 312c: fourth lens; 312d: fifth lens; 312e: sixth lens; F2: second prism; 35: lens barrel; 351: first part; 3511: first accommodating cavity; 352: second part; 3521: second accommodating cavity; 36: filter; 40: main board; 41: computing control unit; 50: camera decorative cover; 51: light transmission window; 60: mounting opening.

## DESCRIPTION OF EMBODIMENTS

In embodiments of this application, words such as "example" or "for example" are used to represent giving an example, an illustration, or a description. Any embodiment or design scheme described by using "example" or "for example" in embodiments of this application should not be construed as being more preferred or more advantageous than another embodiment or design scheme. To be precise, the word "example", "for example", or the like is intended to present a related concept in a specific manner.
In embodiments of this application, terms "first" and "second" are used merely for the purpose of description, and shall not be construed as indicating or implying relative importance or implying a quantity of indicated technical features. Therefore, features defined by using "first" and "second" may explicitly or implicitly include one or more such features.

In the description of embodiments of this application, the term "at least one" means one or more, and "a plurality of" means two or more. "At least one of the following items" or a similar expression thereof means any combination of these items, including a single item or any combination of a plurality of items. For example, at least one of a, b, or c may indicate: a, b, c, a and b, a and c, b and c; or a, b, and c, where a, b, and c may be singular or plural.

In the description of embodiments of this application, the term "and/or" means and covers any of and all possible combinations of one or more associated listed items. The term "and/or" describes an association relationship between associated objects and indicates that three relationships may exist. For example, A and/or B may indicate the following three cases: Only A exists, both A and B exist, and only B exists. In addition, the character "/" in this application generally indicates an "or" relationship between associated objects.

In the description of embodiments of this application, it should be noted that unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium. A "fixed connection" means that there is a mutual connection and a relative position relationship remains unchanged after the connection. In addition, orientation terms such as "inside" and "outside" mentioned in embodiments of this application are merely directions in the accompanying drawings. Therefore, the used orientation terms are intended for better and clearer description and understanding of embodiments of this application, and are not intended for indicating or implying that an indicated apparatus or element needs to have a specific orientation or constructed and operated in a specific orientation, and therefore shall not be construed as limitations on embodiments of this application.

In the descriptions of embodiments of this application, the term "include", "have", or any other variant thereof is intended to cover non-exclusive inclusion, so that a process, a method, an article, or an apparatus that includes a series of elements includes not only those elements but also other elements that are not explicitly listed, or includes elements inherent to such a process, a method, an article, or an apparatus. Without further limitation, the element defined by the sentence "including a..." does not exclude that other identical elements also exist in the process, method, article, or apparatus including the element. Without further limitation, the element defined by the sentence "including a..." does not exclude that other identical elements also exist in the process, method, article, or apparatus including the element.

This application provides an electronic device. The electronic device is an electronic device having a photographing function and a video recording function. The electronic device provided in this application includes but is not limited to a tablet electronic device and a foldable electronic device. The tablet electronic device includes but is not limited to a phablet, a tablet personal computer (tablet personal computer), a tablet laptop computer (laptop computer), a tablet personal digital assistant (personal digital assistant, PDA), a tablet vehicle-mounted device, a tablet wearable device, or the like. The foldable electronic device includes but is not limited to a foldable mobile phone or a foldable computer.

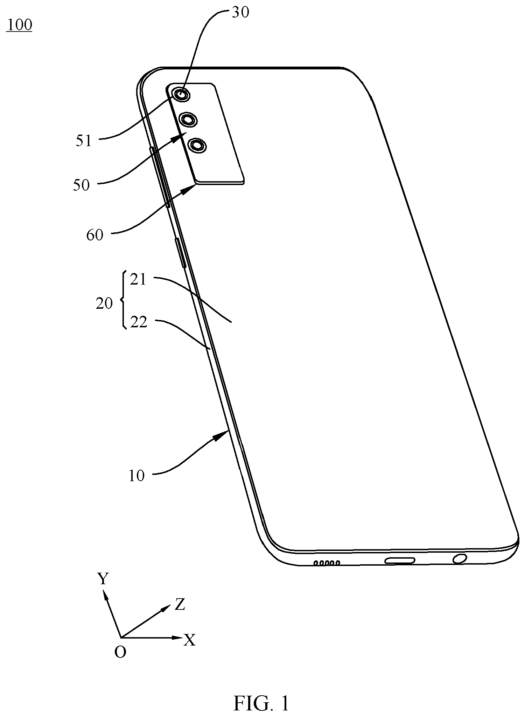

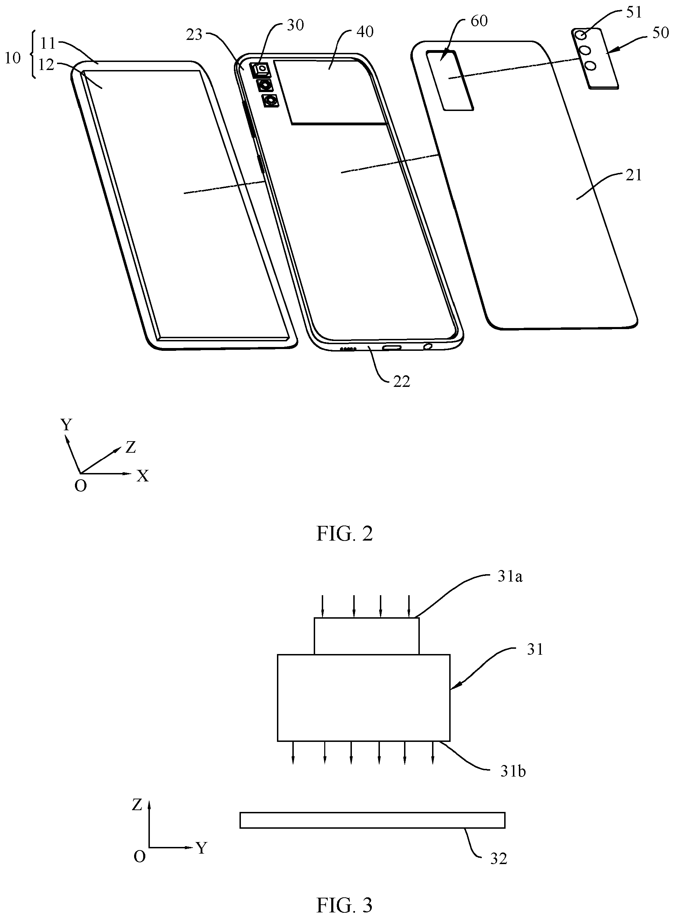

With reference to FIG. 1 and FIG. 2, FIG. 1 is a three-dimensional diagram of an electronic device 100 according to some embodiments of this application, and FIG. 2 is an exploded view of the electronic device 100 shown in FIG. 1. In this embodiment, the electronic device 100 is a phablet. The electronic device 100 includes a screen 10, a back housing 20, a camera module 30, a main board 40, and a camera decorative cover 50.

It may be understood that FIG. 1 and FIG. 2 schematically show only some components included in the electronic device 100. Actual shapes, actual sizes, actual positions, and actual constructions of these components are not limited by those in FIG. 1 and FIG. 2. In some other examples, the electronic device 100 may not include the screen 10 and the camera decorative cover 50.

The electronic device 100 is in a rectangular flat plate shape. For ease of description of the following embodiments, an XYZ coordinate system is established for the electronic device 100, a length direction of the electronic device 100 is defined as an X-axis direction, a width direction of the electronic device 100 is defined as a Y-axis direction, and a thickness direction of the electronic device 100 is defined as a Z-axis direction. It may be understood that the coordinate system of the electronic device 100 may be flexibly set according to an actual requirement. This is not specifically limited herein. In some other embodiments, a shape of the electronic device 100 may alternatively be a shape of a square flat plate, a circular flat plate, an oval flat plate, or the like.

The screen 10 is configured to display an image, a video, and the like. The screen 10 includes a transparent cover plate 11 and a display 12. The transparent cover plate 11 and the display 12 are stacked and fixedly connected. The transparent cover plate 11 is mainly configured to protect the display 12 and protect against dust. A material of the transparent cover plate 11 includes, but is not limited to, glass. The display 12 may be a flexible display, or may be a rigid display. For example, the display 12 may be an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, a quantum dot light emitting diode (quantum dot light emitting diode, QLED) display, or a liquid crystal display (liquid crystal display, LCD).

The back housing 20 is configured to protect an inner electronic component of the electronic device 100. The back housing 20 includes a back cover 21 and a frame 22. The back cover 21 is located on a side that is of the display 12 and that is away from the transparent cover plate 11, and is stacked with the transparent cover plate 11 and the display 12. The frame 22 is fastened to the back cover 21. For example, the frame 22 may be fastened to the back cover 21 by using an adhesive. The frame 22 may alternatively be integrally formed with the back cover 21. In other words, the frame 22 and the back cover 21 are of an integral structure. The frame 22 is located between the back cover 21 and the transparent cover plate 11. The transparent cover plate 11 may be fastened to the frame 22 by using an adhesive. The transparent cover plate 11, the back cover 21, and the frame 22 enclose to form internal accommodating space of the electronic device 100. The internal accommodating space accommodates the display 12. It may be understood that the transparent cover plate 11, the back cover 21, and the frame 22 may constitute at least a part of a structure of the housing of the electronic device 100.

The camera module 30 is configured to photograph a photo/a video. The camera module 30 is fastened in an internal accommodating cavity of the electronic device 100. For example, the camera module 30 may be fastened, in a manner such as screwing, clamping, or welding, to a surface that is of the display 12 and that is near the back cover 21. In another embodiment, with reference to FIG. 2, the electronic device 100 further includes a middle plate 23. The middle plate 23 is fastened to a circumference of an inner surface of the frame 22. For example, the middle plate 23 may be welded to the frame 22. The middle plate 23 and the frame 22 may alternatively be an integral structure. The middle plate 23 is used as a "skeleton" of a structure of the electronic device 100, and the camera module 30 may be fastened on the middle plate 23 through screwing, clamping, welding, or the like.

The camera module 30 may be used as a rear camera module, or may be used as a front camera module.

In some embodiments, with reference to FIG. 1 and FIG. 2, the camera module 30 is fastened to a surface that is of the middle plate 23 and that is near the back cover 21, and a light incident surface of the camera module 30 faces the back cover 21. A mounting opening 60 is disposed on the back cover 21, and the camera decorative cover 50 covers and is fastened to the mounting opening 60. The camera decorative cover 50 is configured to protect the camera module 30. In some embodiments, the camera decorative cover 50 protrudes to a side of the back cover 21 away from the transparent cover plate 11. In this way, the camera decorative cover 50 can increase mounting space of the camera module 30 in the Z-axis direction in the electronic device 100. In some other embodiments, the camera decorative cover 50 may alternatively be flush with the back cover 21 or recessed inward into the internal accommodating space of the electronic device 100. A light transmission window 51 is disposed on the camera decorative cover 50. The light transmission window 51 allows light of scene to be incident on the light incident surface of the camera module 30. In this embodiment, the camera module 30 serves as a rear camera module of the electronic device 100.

In another embodiment, the camera module 30 may be fastened to a surface that is of the middle plate 23 and that is near the transparent cover plate 11. The light incident surface of the camera module 30 faces the transparent cover plate 11. An optical path avoidance hole is disposed on the display 12. The optical path avoidance hole allows light of a scene to pass through the transparent cover plate 11 and then be incident on the light incident surface of the camera module 30. In this way, the camera module 30 serves as a front camera module of the electronic device 100.

With reference to FIG. 3, FIG. 3 is a diagram of a structure of a camera module 30 according to some embodiments of this application. In this embodiment, the camera module 30 includes a lens 31 and a photosensitive chip 32. The lens 31 has a light incident surface 31a and a light exit surface 31b that are opposite to each other. Light of a scene is incident into the lens 31 from the light incident surface 31a, and is emitted from the light exit surface 31b.

The photosensitive chip 32 is configured to: collect an imaging light beam obtained by imaging of the lens 31, and convert image information carried in the imaging light beam into an electrical signal. The photosensitive chip 32 may also be referred to as an image sensor, or may also be referred to as a photosensitive element. The photosensitive chip 32 is located on a side that the light exit surface 31b of the lens 31 faces.

The main board 40 is fastened in the internal accommodating cavity of the electronic device 100. For example, with reference to FIG. 2, the main board 40 may be fastened to the middle plate 23 in a manner such as screwing, clamping, or the like. When the electronic device 100 does not include the middle plate 23, the main board 40 may alternatively be fastened, in a manner such as screwing, clamping, or the like, to a surface that is of the display 12 and that is near the back cover 21.

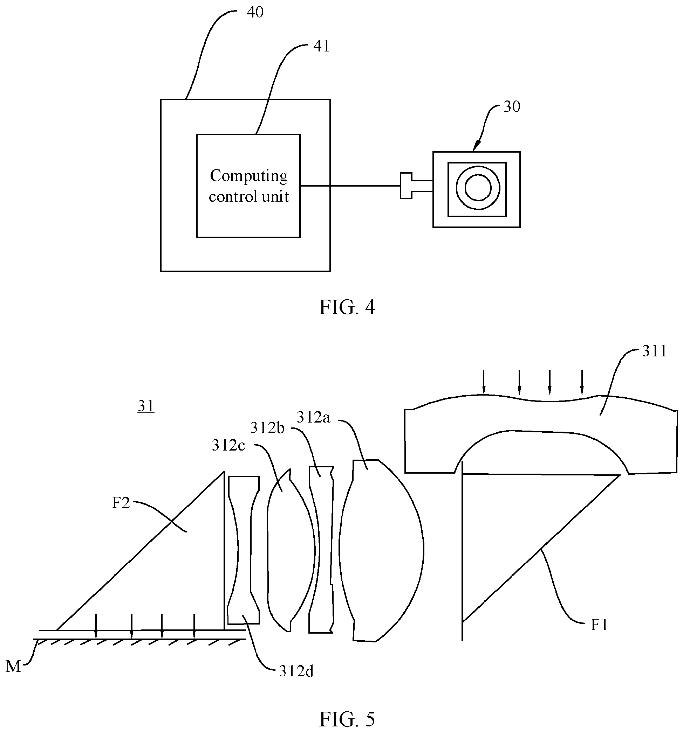

With reference to FIG. 4, FIG. 4 is an internal circuit diagram of the electronic device 100 shown in FIG. 1 and FIG. 2. The electronic device 100 further includes a computing control unit 41. For example, the computing control unit 41 may be disposed on the main board 40. The computing control unit 41 may also be disposed on another circuit board in the electronic device, for example, disposed on a circuit board on which a universal serial bus (universal serial bus, USB) device is located. In some embodiments, the computing control unit 41 is an application processor (application processor, AP).

The computing control unit 41 is electrically connected to the camera module 30. The computing control unit 41 is configured to receive and process an electrical signal that includes image information and that is from the camera module 30. The computing control unit 41 is further configured to adjust an aperture of the camera module 30 and drive a motor to move, to implement adjustment of light entering the camera module 30, automatic focusing (automatic focusing, AF) motion, optical image stabilization (optical image stabilization, OIS) motion, and the like.

A long-focus lens has a function similar to that of a telescope, and can be used to photograph distant objects. A framing range of the long-focus lens is far smaller than a range reached by a naked eye (a smaller field of view), to facilitate long-distance snapping. Electronic devices 100 with a long-focus photographing function are increasingly favored. As a quantity of cameras on the electronic device 100 increases, a camera module 30 including a long-focus lens is more widely applied to the electronic device 100.

With reference to FIG. 5, FIG. 5 is a diagram of a structure of a lens 31 according to some related technologies of this application. The optical lens 31 is a periscopic long-focus lens. The lens 31 includes a first lens 311, a first prism F1, a second lens 312a, a third lens 312b, a fourth lens 312c, a fifth lens 312d, and a second prism F2 that are sequentially disposed from an object side to an image side. Both the first prism F1 and the second prism F2 are prisms whose cross sections are right-angled triangles, and are used to refract optical paths. The lens 31 further includes an image plane M. Light from an object side passes through the first lens 311 and then enters the first prism F1. The first prism F1 refracts an optical path and then projects the light to the second lens 312a. The light continues to pass through the third lens 312b, the fourth lens 312c, and the fifth lens 312d. The second prism F2 refracts the optical path and projects the light to the image plane M. A photosensitive chip 32 may be disposed on the image plane M. The light projected to the image plane M is received by the photosensitive chip 32 and converted into an image signal. The photosensitive chip 32 then transmits the image signal to another control system (for example, the computing control unit 41 shown in FIG. 4) for image parsing and other processing.

In addition, the lens 31 further includes an aperture (also referred to as a diaphragm, which is not shown in FIG. 5). The aperture is disposed on a side that is of the first lens 311 and that is near an object field. An amount of light entering the lens 31 is controlled by using the aperture.

The lens 31 in the foregoing embodiment uses a periscopic structure. In this case, a focal length of the lens 31 is increased, but a volume and a weight of the lens 31 are also relatively large. For example, a volume of a periscopic long-focus lens whose focal length is 11.26 mm is 19.28 mm×10.95 mm. In addition, because the focal length is relatively long, to implement miniaturization of the lens 31, an aperture coefficient (FNO) of the lens 31 is usually relatively large, and therefore a photographing effect of the lens 31 in a relatively dark environment is poor. This does not help improve photographing competitiveness of the electronic device 100.

Specifically, a calculation formula of the aperture coefficient FNO of the lens 31 is: FNO=f/EPD. Herein, f is an effective focal length of the lens 31, and EPD is an effective entrance pupil diameter (also referred to as a diaphragm diameter) of the lens 31. The effective focal length f determines a magnification of an object. The effective entrance pupil diameter EPD determines an amount of incoming light in a unit time. The effective entrance pupil diameter EPD is adjusted by using the aperture disposed inside the lens 31.

It can be learned from the calculation formula of the aperture coefficient FNO that to implement a same aperture coefficient FNO, a diaphragm diameter of a long-focus lens is greater than a diaphragm diameter of a short-focus lens. In the long-focus lens of the periscopic structure, the aperture is disposed in the first prism F1. When the diaphragm diameter is relatively large, a volume of the first prism F1 also increases. In this case, a volume of the long-focus lens of the periscopic structure is relatively large. However, to implement both a long focal length and volume miniaturization of the long-focus lens of the periscopic structure, the aperture coefficient FNO of the long-focus lens of the periscopic structure increases. When the aperture coefficient FNO increases, an amount of light entering the long-focus lens of the periscopic structure decreases, and therefore a photographing effect of the long-focus lens of the periscopic structure becomes poor in a relatively dark environment. This does not help improve photographing competitiveness of the electronic device 100.

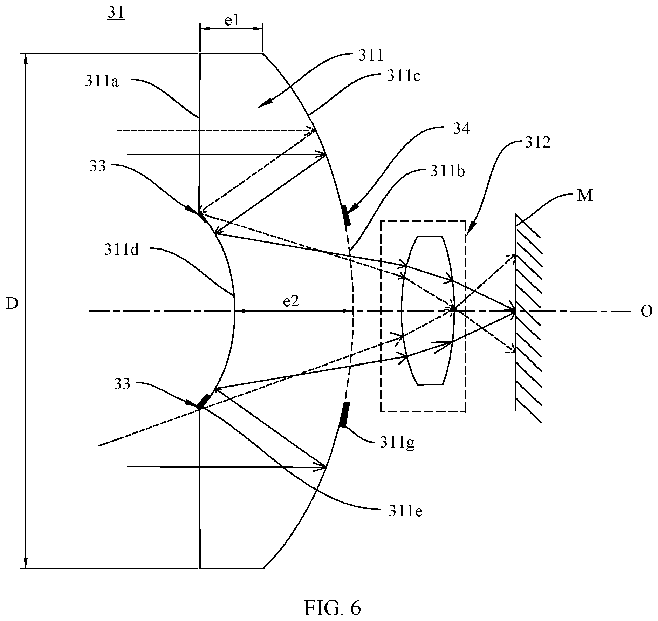

To resolve the foregoing technical problem, with reference to FIG. 6, FIG. 6 is a diagram of a lens 31 according to some embodiments of this application. The lens 31 includes a first lens 311 and a second lens group 312 that are sequentially disposed along an optical axis O from an object side to an image side. In other words, the second lens group 312 is located on a side that an image-side surface of the first lens 311 faces. An image plane M of the lens 31 is located on a side that is of the second lens group 312 and that is away from the first lens 311. Light from the object side passes through the first lens 311 and then enters the second lens group 312, and continues to pass through the second lens group 312 to be projected to the image plane M.

It may be understood that the second lens group 312 may include one or more lenses. A quantity of lenses in the second lens group 312 is not limited in this embodiment of this application. When the second lens group 312 includes a plurality of lenses, the plurality of lenses are arranged along the optical axis O of the lens 31. In addition, in some other embodiments, the lens 31 may not include the second lens group 312.

With reference to FIG. 6, the first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a is located on a side that is of the second reflecting surface 311d and that is away from an optical axis O. The second refracting surface 311b and the first reflecting surface 311c are located at an image-side surface of the first lens 311. The first reflecting surface 311c is located on a side that is of the second refracting surface 311b and that is away from the optical axis O.

Incident light enters the first lens 311 through the first refracting surface 311a, then is sequentially reflected by the first reflecting surface 311c and the second reflecting surface 311d, and is emitted from the first lens 311 through the second refracting surface 311b. Solid lines with arrows in FIG. 6 represent an optical path of the incident light in the lens 31.

Specifically, a position of the first reflecting surface 311c corresponds to a position of the first refracting surface 311a. In this way, light refracted by the first refracting surface 311a can be received and reflected by the first reflecting surface 311c. A position of the second reflecting surface 311d corresponds to a position of the first reflecting surface 311c, and the position of the second reflecting surface 311d corresponds to a position of the second refracting surface 311b. In this way, light reflected by the first reflecting surface 311c can be received and reflected by the second reflecting surface 311d, and light reflected by the second reflecting surface 311d can be emitted from the first lens 311 after being received and refracted by the second refracting surface 311b.

In the lens 31 in this embodiment of this application, the first refracting surface 311a, the second refracting surface 311b, the first reflecting surface 311c, and the second reflecting surface 311d are disposed on the first lens 311. Incident light from an object side enters the first lens 311 through the first refracting surface 311a, is received by the first reflecting surface 311c and reflected to the second reflecting surface 311d, then is received by the second reflecting surface 311d and reflected to the second refracting surface 311b, and is emitted from the first lens 311 after being refracted by the second refracting surface 311b. In this way, four times of adjustment of light and two times of reflection on an optical path can be implemented by using the first lens 311. No additional reflecting element needs to be disposed. Therefore, a focal length of the lens 31 can be increased, a dimension of the lens 31 in a direction of the optical axis O can be reduced, and a total length of the lens 31 can be reduced, to help implement a requirement for a miniaturization design of the lens 31.

A long focal length and volume miniaturization of the lens 31 can be both considered in the lens 31 in this embodiment of this application. It may be learned from the calculation formula of the aperture coefficient FNO that FNO=f/EPD. In this embodiment of this application, in comparison with a long-focus lens of a periscopic structure, for the lens 31, a diaphragm diameter may be increased, that is, an aperture may be increased, when a same aperture coefficient and a same focal length are implemented, to ensure an amount of incoming light when the focal length is increased and improve a photographing effect of the lens 31 in a relatively dark environment. In addition, when a same aperture coefficient is implemented and a diaphragm diameter remains unchanged, that is, when a volume of the lens 31 remains unchanged, the focal length may be increased.

In some embodiments, the first refracting surface 311a is located on one or more sides of the second reflecting surface 311d, to receive light on the one or more sides of the second reflecting surface 311d. An orthographic projection of the first refracting surface 311a on a reference plane does not overlap an orthographic projection of the second reflecting surface 311d on the reference plane. The reference plane is perpendicular to the optical axis O of the lens 31.

With reference to FIG. 6, the first refracting surface 311a is located in an edge region of the object-side surface of the first lens 311, and the second reflecting surface 311d is located in a central region of the image-side surface of the first lens 311. The first refracting surface 311a may surround an outer side of the second reflecting surface 311d. The first refracting surface 311a is annular. For example, the first refracting surface 311a is ring-shaped. In this way, an area of the first refracting surface 311a can be increased, to help expand a field of view of the first lens 311 and increase an amount of incident light of the first lens 311.

Still with reference to FIG. 6, the first reflecting surface 311c is located in an edge region of the image-side surface of the first lens 311, and the second refracting surface 311b is located in a central region of the image-side surface of the first lens 311. The first reflecting surface 311c may surround an outer side of the second refracting surface 311b. The first reflecting surface 311c is annular. For example, the first reflecting surface 311c is ring-shaped. In this way, the first reflecting surface 311c may correspond to the first refracting surface 311a and the second reflecting surface 311d, and the second reflecting surface 311d may correspond to the second refracting surface 311b.

For example, the first refracting surface 311a is planar or concave. The second reflecting surface 311d is concave. The first reflecting surface 311c is convex, and the second refracting surface 311b is convex.

In some embodiments, with reference to FIG. 6, an intersection point between the optical axis O and a surface at which the second refracting surface 311b is located (that is, a vertex of the second refracting surface 311b) overlaps an intersection point between the optical axis O and the surface at which the first reflecting surface 311c is located (that is, a vertex of a surface at which the first reflecting surface 311c is located). The second refracting surface 311b and the first reflecting surface 311c use a same aspherical parameter. Specifically, in this embodiment, the first reflecting surface 311c and the second refracting surface 311b are coplanar. For ease of distinguishing between the first reflecting surface 311c and the second refracting surface 311b, in the diagram of FIG. 6, the first reflecting surface 311c is shown by using a solid line, and the second refracting surface 311b is shown by using a dashed line. The first lens 311 of this structure may be manufactured by using an optical glass molding process, or may be manufactured by using an optical plastic injection molding process. In this way, a processing technology of the first lens 311 can be simplified, and structural precision of the first lens 311 can be improved, to improve a photographing effect of the lens 31.

Specifically, the first lens 311 may be made of a transparent material such as glass or plastic. In this way, the first refracting surface 311a and the second refracting surface 311b may be formed on the first lens 311. To increase transmittance of the first refracting surface 311a and the second refracting surface 311b, positions corresponding to the first refracting surface 311a and the second refracting surface 311b may be coated with an anti-reflective coating. The first reflecting surface 311c and the second reflecting surface 311d may be formed by coating corresponding positions on the first lens 311 with a reflective film. For example, the positions corresponding to the first reflecting surface 311c and the second reflecting surface 311d of the first lens 311 may be coated with a silver film, to form the first reflecting surface 311c and the second reflecting surface 311d.

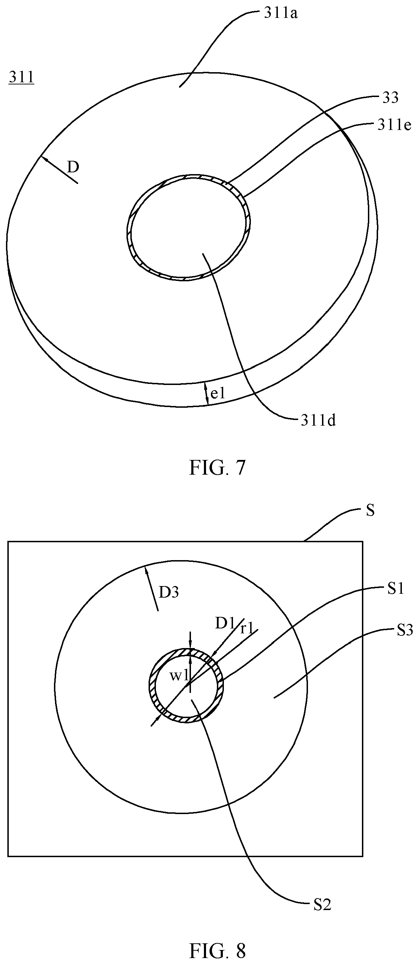

With reference to both FIG. 6 and FIG. 7, FIG. 7 is a three-dimensional diagram of a first lens 311 in the lens 31 shown in FIG. 6. The first lens 311 further includes a first transition surface 311e connected between the first refracting surface 311a and the second reflecting surface 311d. A dashed line with an arrow in FIG. 6 shows an optical path of light passing through the first transition surface 311e. The first transition surface 311e does not participate in imaging. The light passing through the first transition surface 311e generates stray light. The stray light may interfere with imaging and affect imaging quality.

To avoid generation of stray light, a light-shielding layer 33 is disposed on the first transition surface 311e. The light-shielding layer 33 may be formed on the first transition surface 311e through coating or by using a film coating process. In some embodiments, the light-shielding layer 33 is an ink layer. For example, the light-shielding layer 33 is a black ink layer. In some other embodiments, the light-shielding layer 33 may be alternatively a titanium layer, a chromium layer, a silicon layer, a silicon dioxide layer, or a silicon carbide layer. The titanium layer, the chromium layer, the silicon layer, the silicon dioxide layer, and the silicon carbide layer are all black light-shielding layers 33 with relatively good light absorptivity. The foregoing light-shielding layer 33 is disposed on the first transition surface 311e. Black coating or black plating processing is performed on the first transition surface 311e, to implement a better light-shielding effect and help improve imaging quality of the lens 31.

In some embodiments, the first refracting surface 311a and the second reflecting surface 311d are smoothly transitionally connected through the first transition surface 311e. For example, the first transition surface 311e is an arc-shaped surface. In this way, sharp protrusions or undesirable protrusions can be avoided between the first refracting surface 311a and the second reflecting surface 311d. Specifically, sharp protrusions or undesirable protrusions or the like can be avoided at a connection position between the first refracting surface 311a and the first transition surface 311e, a surface of the first transition surface 311e, and a connection position between the first transition surface 311e and the second reflecting surface 311d. Therefore, uniformity of the light-shielding layer 33 can be ensured, adhesion of the light-shielding layer 33 to the first transition surface 311e can be improved, and the light-shielding layer 33 can be prevented from falling off, to further ensure a light-shielding effect of the light-shielding layer 33 and reduce processing difficulty of the light-shielding layer 33.

Based on the foregoing embodiment, to further reduce processing difficulty of the first lens 311 and ensure a light-shielding effect of the light-shielding layer 33, both the first transition surface 311e and the second reflecting surface 311d are located on a side that is of the first refracting surface 311a and that is close to the image plane M of the lens 31. Specifically, an intersection point between the optical axis O and a surface at which the first refracting surface 311a is located is located on a side that is of the second reflecting surface 311d and that is opposite to the second refracting surface 311b. In other words, a vertex of the surface at which the first refracting surface 311a is located is located on a side that is of the second reflecting surface 311d and that is opposite to the second refracting surface 311b. Optionally, the first transition surface 311e and the second reflecting surface 311d are coplanar. In this case, an intersection point between a first surface and the optical axis O is set on a side that is of the second reflecting surface 311d and that is opposite to the second refracting surface 311b. In this way, the second reflecting surface 311d can be prevented from protruding from the first refracting surface 311a, to help implement a smooth transitional connection between the first refracting surface 311a and the second reflecting surface 311d, and further improve appearance aesthetics of the first lens 311.

To further avoid generation of stray light, still with reference to FIG. 6, the first reflecting surface 311c is connected to the second refracting surface 311b through a second transition surface 311g, and a light-shielding structure 34 is disposed on the second transition surface 311g.

In embodiments, with reference to FIG. 8, FIG. 8 is a diagram of an orthographic projection of an object-side surface of the first lens 311 shown in FIG. 7 on a reference plane S. The reference plane S is perpendicular to the optical axis O of the lens 31. Specifically, an orthographic projection of the first transition surface 311e on the reference plane S is a first projection S1, and an orthographic projection of the second reflecting surface 311d on the reference plane S is a second projection S2. The first projection S1 is annular, and the second projection S2 is circular. A ratio of an annular band width w1 of the first projection S1 to a radius r1 of the second projection S2 is less than or equal to 0.1. In other words, $w1/r1 \leq 0.1$. For example, the ratio of the annular band width w1 of the first projection S1 to the radius r1 of the second projection S2 is 0.09, 0.08, 0.07, 0.06, 0.05, or 0.04. In this way, the annular band width of the first projection S1 is set to not greater than one tenth of the radius of the second projection S2, to reduce stray light and ensure areas of the first refracting surface 311a and the second reflecting surface 311d, thereby further ensuring a reception area of incident light and a reflection area in a second time of reflection and improving imaging quality of the lens 31.

The annular band width of the first projection S1 is a difference between an outside diameter and an inside diameter of the first projection S1.

Still with reference to FIG. 8, an orthographic projection of the first refracting surface 311a on the reference plane S is a third projection S3, and the third projection S3 is ring-shaped. A ratio of the outside diameter D1 of the first projection S1 to an outside diameter D3 of the third projection S3 is greater than or equal to 0.3 and less than or equal to 0.5. In other words, $0.3 \leq D1/D3 \leq 0.5$. For example, the ratio of the outside diameter D1 of the first projection S1 to the outside diameter D3 of the third projection S3 is 0.3, 0.35, 0.4, 0.45, or 0.5. In this way, processing difficulty of the first lens 311 and an appearance of the first lens 311 can be both considered.

In embodiments, an outside diameter D of the first lens 311 is greater than or equal to 8 mm and less than or equal to 15 mm. The outside diameter D (also referred to as an effective caliber of the first lens 311) of the first lens 311 is equal to the outside diameter D3 of the third projection S3. In this way, the reception area of the incident light of the first lens 311 and the reflection area in the second time of reflection can be ensured, to help improve imaging quality of the lens 31. In addition, an overall volume of the first lens 311 can be reduced, and processing difficulty of the first lens 311 can be reduced, to help molding and processing of the first lens 311, thereby improving a molding and processing yield of the first lens 311.

In some embodiments, with reference to FIG. 6 and FIG. 7, an edge thickness e1 of the first lens 311 is greater than or equal to 0.5 mm and less than or equal to 1.2 mm. In other words, 0.5 mm$\leq$e1$\leq$1.2 mm. The edge thickness of the first lens 311 is a thickness of the first lens 311 at an outer edge of the first lens 311. The first lens 311 may be fastened in a lens barrel of the lens 31 by using the outer edge of the first lens 311. Therefore, in the lens 31 in this embodiment of this application, the edge thickness e1 of the first lens 311 is set to greater than or equal to 0.5 mm and less than or equal to 1.2 mm, to help implement assembly of the first lens 311 and the lens barrel and help reduce an overall thickness of the lens 31, thereby reducing the volume of the lens 31 and implementing a miniaturization design of the lens 31. Further, thicknesses of the camera module 30 and the electronic device 100 are reduced, and a photographing effect and a lightness design of the electronic device 100 are both considered.

In some embodiments, still with reference to FIG. 6, a central thickness e2 of the first lens 311 is greater than or equal to 1.5 mm and less than or equal to 2.5 mm. The central thickness of the first lens 311 is a thickness of the first lens 311 in an extension direction of the optical axis O, that is, the thickness of the first lens 311 on the optical axis O. In this way, when the overall thickness of the first lens 311 is reduced, the processing difficulty of the first lens 311 can be reduced, to help molding and processing of the first lens 311, thereby improving a molding and processing yield of the first lens 311.

In some embodiments, a ratio of the central thickness e2 of the first lens 311 to the outside diameter D of the first lens 311 is greater than 0.1. In other words, e2/D>0.1. In this way, this helps implement molding and processing of the first lens 311 and increase a molding or processing yield of the first lens 311.

Based on any one of the foregoing embodiments, a ratio of a focal length LEF1 of the first lens 311 to a focal length LEF2 of the second lens group 312 is greater than -5.5 and less than -2. In other words, -5.5<LEF1/LEF2<-2. Further, the ratio of the focal length LEF1 of the first lens 311 to the focal length LEF2 of the second lens group 312 is greater than -3.6 and less than - 2. In other words, -3.6<LEF1/LEF2<-2. When the second lens group 312 includes a plurality of lenses, the focal length LEF2 of the second lens group 312 is a combined focal length of the plurality of lenses. In this way, the lens 31 can have a good long-focus characteristic and relatively good imaging quality. In addition, the total length of the lens 31 can be reduced to implement miniaturization of the lens 31, to help implement miniaturization of the camera module 30 and the electronic device 100.

In some embodiments, a ratio of the focal length LEF1 of the first lens 311 to the effective focal length f of the lens 31 is greater than 0.35 and less than 0.6. In other words, 0.35<LEF1/f<0.6. In this way, this helps properly distribute focal powers to adjust an optical path, so that an optical path outside a field of view can be effectively prevented from reaching the image plane M, to avoid adverse impact on imaging performance of the lens 31 and effectively improve imaging quality of the lens 31.

In some embodiments, a ratio of the focal length LEF2 of the second lens 312a to the effective focal length f of the lens 31 is greater than -0.25 and less than 0. In other words, 0.25<LEF2/f<0. In this way, this also helps properly distribute focal powers to adjust an optical path, so that an optical path outside a field of view can be effectively prevented from reaching the image plane M, to avoid adverse impact on imaging performance of the lens 31 and effectively improve imaging quality of the lens 31.

In some embodiments, a distance between the object-side surface of the first lens 311 and the image plane M on the optical axis O is TTL, and a ratio of TTL to the effective focal length f of the lens 31 is greater than or equal to 0.3 and less than or equal to 0.5. In other words, 0.3$\leq$LEF2/f$\leq$0.5. In this way, when the lens 31 has a good long-focus characteristic, the total length of the lens 31 can be reduced to implement miniaturization of the lens 31, to help implement miniaturization of the camera module 30 and the electronic device 100.

In some embodiments, a radius of a maximum image circle of the lens 31 is Imgh, and a ratio of Imgh to TTL is greater than 0.1. In other words, Imgh/TTL>0.1. The radius Imgh of the maximum image circle of the lens 31 is half a diagonal length of an effective pixel region on the image plane M. In this way, when the overall size of the lens 31 is reduced, pixels of the lens 31 can be ensured, so that the miniaturization design of the lens 31 and the high-resolution image can be both considered.

In some embodiments, a ratio of the radius Imgh of the maximum image circle of the lens 31 to the outside diameter D of the first lens 311 is greater than 0.2. In other words, Imgh/D>0.2. In this way, when the overall size of the lens 31 is reduced, pixels of the lens 31 can be ensured, so that the miniaturization design of the lens 31 and the high-resolution image can be both considered.

In some embodiments, a ratio of the effective focal length f of the lens 31 to an entrance pupil diameter EPD of the lens 31 is less than or equal to 3. In this case, the aperture coefficient FN0 of the lens 31 is less than or equal to 3. In other words, FN0=f/EPD≤3. In this way, when the long-focus characteristic of the lens 31 is ensured, a light passing amount of the lens 31 can be increased, and imaging performance of the lens 31 can be improved, so that a clear imaging effect can still be achieved when the lens 31 performs photographing in a relatively dark environment.

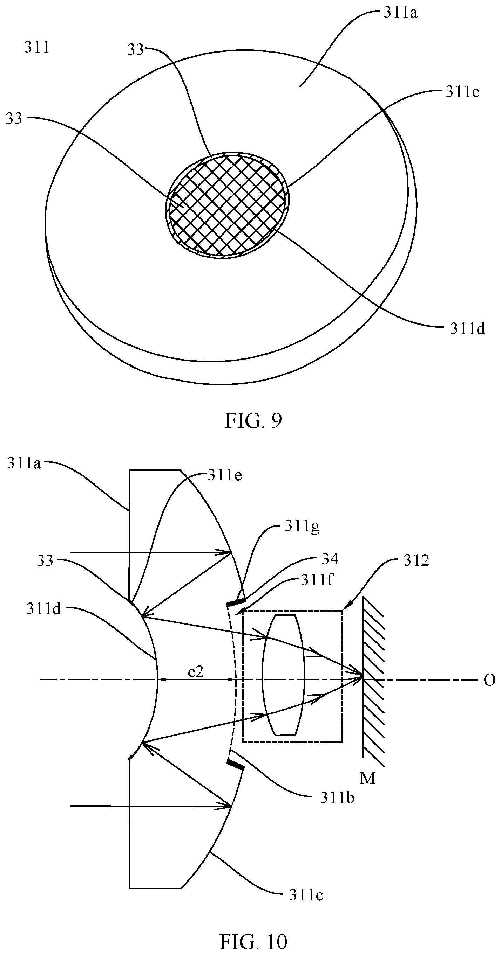

In some other embodiments, with reference to FIG. 9, FIG. 9 is a three-dimensional diagram of a first lens 311 according to some other embodiments of this application. A difference between the first lens 311 in this embodiment and the first lens 311 shown in FIG. 7 is that the light-shielding layer 33 is disposed on the first transition surface 311e in the first lens 311 in this embodiment, and the foregoing light-shielding layer 33 is also disposed on a surface that is of the second reflecting surface 311d and that is opposite to the image plane M of the first lens 311. In this way, a color of the first transition surface 311e can be consistent with a color of the second reflecting surface 311d, to further improve appearance aesthetics of the first lens 311. In addition, a setting area of the light-shielding layer 33 can be increased, and processing precision of the light-shielding layer 33 can be reduced, to reduce processing difficulty of the light-shielding layer 33 and improve a processing yield of the first lens 311.

In some other embodiments, with reference to FIG. 10, FIG. 10 is a diagram of a structure of a lens 31 according to some other embodiments of this application. A difference between the lens 31 in this embodiment and the lens 31 shown in FIG. 6 is that the first reflecting surface 311c and the second refracting surface 311b of the first lens 311 in the lens 31 shown in FIG. 6 are coplanar, while in this embodiment, the intersection point between the second refracting surface 311b and the optical axis O (that is, the vertex of the second refracting surface 311b) is located on a side that is of the surface at which the first reflecting surface 311c is located and that faces the second reflecting surface 311d.

Specifically, with reference to FIG. 10, a recessed part 311f recessed toward the object-side surface of the first lens 311 is disposed at the image-side surface of the first lens 311, and the second refracting surface 311b is formed on a bottom wall of the recessed part 311f. The bottom wall of the recessed part 311f is a surface that is of the recessed part 311f and that faces the image plane M. A part of the second lens group 312 may be located in the recessed part 311f. A surface that is of the second lens group 312 and that is opposite to the first lens 311 is located on a side that is of the first reflecting surface 311c and that is opposite to the object-side surface. In this way, when light is reflected for a plurality of times in the first lens 311, a structure of the lens 31 is more compact, to help further reduce a size of the lens 31 and implement a miniaturization design of the lens 31.

In this embodiment, the central thickness of the first lens 311 may be greater than or equal to 1 mm and less than or equal to 2 mm. In addition, because the recessed part 311f is disposed at the object-side surface of the first lens 311, to reduce processing difficulty and processing precision of the first lens 311, the first lens 311 in this embodiment is preferably integrally molded by using an injection molding process.

Further, in this embodiment, the first reflecting surface 311c is connected to the second refracting surface 311b through the second transition surface 311g. To reduce stray light, a light-shielding structure 34 is disposed on the second transition surface 311g.

It may be understood that, in another embodiment, to reduce stray light, a light-shielding structure may also be disposed between the first reflecting surface 311c and the second refracting surface 311b.

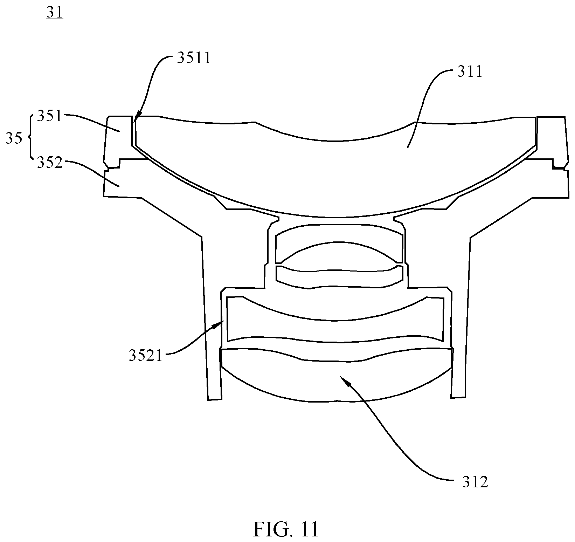

With reference to FIG. 11, FIG. 11 is a diagram of a lens 31 according to some still other embodiments of this application. In addition to the first lens 311 and the second lens group 312 in the embodiment shown in FIG. 6, the lens 31 in this embodiment further includes a lens barrel 35. The first lens 311 and the second lens group 312 are separately and independently fastened in the lens barrel 35. The lens barrel 35 may be an integral structural member, or may be formed by assembling a plurality of parts in a manner of bonding, clamping, screwing, or the like.

In some embodiments, with reference to FIG. 11, the lens barrel 35 includes a first part 351 and a second part 352 that are connected. The first part 351 has a first accommodating cavity 3511. The second part 352 has a second accommodating cavity 3521. The first accommodating cavity 3511 communicates with the second accommodating cavity 3521. The first lens 311 is fastened to an inner wall surface of the first accommodating cavity 3511. The second lens group 312 is fastened to an inner wall surface of the second accommodating cavity 3521. Therefore, the first lens 311 and the second lens group 312 may be separately fastened in the lens barrel 35, to reduce assembling difficulty of the first lens 311 and the second lens group 312 and improve assembling efficiency.

Optionally, the first part 351 and the second part 352 are an integral member. In this way, coaxiality between the first lens 311 and the second lens group 312 can be ensured.

In addition, the lens 31 further includes a filter. The filter can be used to reduce or eliminate interference of ambient noise to the image sensor. The filter may be disposed on a side that is of the second lens group 312 and that faces the image plane M.

The following describes the lens 31 in this embodiment in detail with reference to specific parameters.

**Embodiment 1**

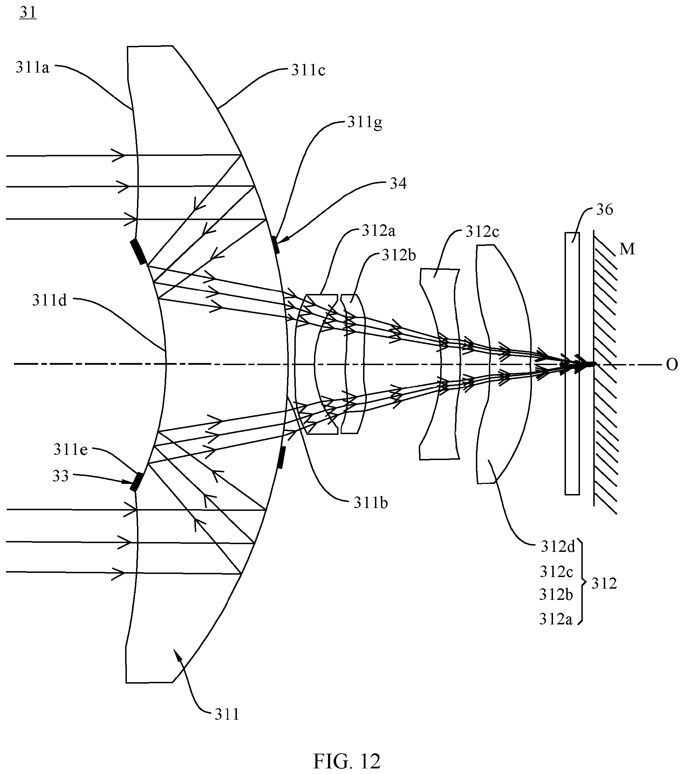

With reference to FIG. 12, FIG. 12 is a diagram of a structure of a lens 31 according to some embodiments of this application. Solid lines with arrows in FIG. 12 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, and a fifth lens 312d that are sequentially disposed along the optical axis O from the object side to the image side.

The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.

The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex. The second refracting surface 311b is convex. The first reflecting surface 311c and the second refracting surface 311b are coplanar. The first reflecting surface 311c is connected to the second refracting surface 311b through a second transition surface 311g. A light-shielding structure 34 is disposed on the second transition surface 311g.

A focal power of the first lens 311 is positive. A focal power of the second lens 312a is negative. A focal power of the third lens 312b is negative. A focal power of the fourth lens 312c is positive. A focal power of the fifth lens 312d is negative.

It should be noted that a focal power (focal power) is equal to a difference between a light beam convergence degree on an image side and a light beam convergence degree on an object side, and represents a light deflection capability of an optical system. When a refractive index of air is approximate to 1, the focal power may be expressed as a reciprocal of a focal length on the image side. As a value of the focal power is larger, refraction of an optical system for an incident parallel light beam is stronger. When the focal power is greater than 0 (that is, the focal power is positive), refraction of the optical system indicates convergence. When the focal power is less than 0 (that is, the focal power is negative), refraction of the optical system is divergence. When the focal power is equal to 0, the focal power corresponds to plane refraction. In other words, a parallel optical axis along the optical axis is still a parallel light beam along the optical axis O after refraction, without light refraction.

Table 1-1 shows optical parameters of the lens 31 in Embodiment 1.

**Table 1-1: Optical parameters of the lens 31 in Embodiment 1**

| | Optical parameters |
|---|---|
| Effective focal length (f) | 14 mm |
| Field of view (FVO) | 16.5° |
| Aperture coefficient (FNO) | 2.2 |
| Total track length (TTL) | 6.5 mm |
| Focal length of the first lens (LEF1) | 7.39 mm |
| Focal length of the second lens group 312 (LEF2) | -2.75 mm |
| Radius of a maximum image circle (Imgh) | 2.2 mm |
| Maximum outside diameter of the first lens (D) | 9.07 mm |

Specifically, in this embodiment, the effective focal length f of the lens 31 is 14 mm, the field of view FVO is 16.5°, and the aperture coefficient FNO is 2.2. In other words, f/EPD=2.2. The total track length, that is, a distance TTL from the object-side surface of the first lens 311 to an image plane M on the optical axis O is 6.5 mm. The focal length of the first lens 311: LEF1 is 7.39 mm. The focal length of the second lens group 312: LEF2 is -2.75 mm. The radius of the maximum image circle: Imgh is 2.2 mm. Herein, LEF1/LEF2=-2.69, TTL/f=0.46, Imgh/TTL=0.16, LEF1/f=0.53, LEF2/f=-0.2, and Imgh/D=0.24.

Table 1-2 shows specific parameters of each element of the lens 31 in Embodiment 1. In the same lens, a surface with a relatively small surface number is an object-side surface of the lens, and a surface with a relatively large surface number is an image-side surface of the lens. For example, surface numbers 5 and 6 respectively correspond to an object-side surface and an image-side surface of the second lens 312a. A curvature radius in Table 1-2 is a curvature radius of an object-side surface or an image-side surface of a corresponding surface number at the optical axis O. A first value in a "thickness" parameter column of the lens is a thickness of the lens on the optical axis O. A second value is a distance from an image-side surface of the lens to a next surface on the optical axis O. A positive or negative value of the thickness represents only a direction. A value of a diaphragm in the "thickness" parameter column is a distance from the diaphragm to a vertex of a next surface (the vertex is an intersection point between the surface and the optical axis O) on the optical axis O. By default, a direction from the object-side surface of the second lens 312a to an image-side surface of a final lens is a positive direction of the optical axis O. When the value is negative, it indicates that the diaphragm is disposed on an object side of a vertex of a next surface. If a thickness of the diaphragm is positive, the diaphragm is on an image side of a vertex of a next surface. It may be understood that units of the curvature radius, the thickness, and the focal length in Table 1-2 are all mm. In addition, a reference wavelength for a refractive index, an Abbe number, and a focal length in Table 1-2 is 587nm. In addition, Infinity in Table 1-2 indicates that the curvature radius is infinite.

**Table 1-2: Specific parameters of each element of the lens 31 in Embodiment 1**

| Embodiment 1 | | | | | | | | | |
|---|---|---|---|---|---|---|---|---|---|
| f=14 mm FNO=2.2 FOV=16.5° TTL=6.5 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |
| 1 | Object-side edge region of the first lens | Aspherical surface | 49.442 | 2.350 | Glass | 1.58 | 59.4 | 7.39 | 7.39 |
| 2 | Image-side edge region of the first lens (first reflecting surface) | Aspherical surface | -7.112 | -1.927 | Mirror | | | | |
| 3 | Object-side central region of the first lens (second reflecting surface) | Aspherical surface | -4.072 | 1.927 | Mirror | | | | |
| 4 | Image-side central region of the first lens | Aspherical surface | -7.112 | 0.000 | | | | | |
| Diaphragm | Diaphragm | Spherical surface | Infinity | 0.145 | | | | | |

(continued)

| Surface number | Surface name | Surface type | Curvature radius | Thickness | Material | Refractive index | Abbe number | Focal length | Combined focal length |
|---|---|---|---|---|---|---|---|---|---|
| | | | | | Embodiment 1 | | | | |
| | | | f=14 mm FNO=2.2 FOV=16.5° TTL=6.5 mm | | | | | | |
| Object plane | Object plane | Spherical surface | Infinity | Infinity | | | | | |
| 5 | Second lens | Aspherical surface | -14.884 | 0.250 | Plastic | 1.54 | 56.1 | -5.95 | 2.75 |
| 6 | | Aspherical surface | 4.186 | 0.601 | | | | | |
| 7 | Third lens | Aspherical surface | 6.190 | 0.250 | Plastic | 1.67 | 19.20 | -16.88 | |
| 8 | | Aspherical surface | 3.954 | 0.700 | | | | | |
| 9 | Fourth lens | Aspherical surface | -5.399 | 0.300 | Plastic | 1.57 | 37.30 | 72.23 | |
| 10 | | Aspherical surface | -4.871 | 0.307 | | | | | |
| 11 | Fifth lens | Aspherical surface | -22.564 | 0.553 | Plastic | 1.54 | 56.1 | -9.64 | |
| 12 | | Aspherical surface | -4.089 | 0.594 | | | | | |
| 13 | Filter | Spherical surface | Infinity | 0.210 | Glass | 1.52 | 64.2 | | |
| 14 | | Spherical surface | Infinity | 0.240 | | | | | |
| Image plane | Image plane | Spherical surface | Infinity | 0.0000 | | | | | |
| Note: The reference wavelength is 587 nm. | | | | | | | | | |

In this embodiment, a central thickness e2 of the first lens 311 is 1.927 mm, a maximum outside diameter D of the first lens 311 is 9.07 mm, and d/D=0.21. In this way, this helps implement molding and processing of the first lens 311 and increase a molding or processing yield of the first lens 311.

In Embodiment 1, an object-side surface and an image-side surface of any one of the first lens 311, the second lens 312a, the third lens 312b, the fourth lens 312c, and the fifth lens 312d are both aspherical surfaces.

In an optical design, to provide more design freedom for designing and optimization of an optical system, a rotationally symmetric aspherical surface is usually used. A standard expression of the rotationally symmetric aspherical surface is usually a combination of a reference quadric surface and an additional polynomial. The additional polynomial may be a Zernike polynomial, a Q-type polynomial, or the like.

The Zernike polynomial, that is, a conditional aspherical polynomial, is a method widely applied in an aspherical design. However, precision of an aspherical surface-type advanced coefficient is excessively highly required in the Zernike polynomial, which brings many inconveniences in manufacturing and detection. The Q-type polynomial is a new algorithm of an axially symmetric aspherical surface, and can be used to effectively reduce difficulty in manufacturing an aspherical lens and find the most ideal aspherical surface type.

The Q-type polynomial includes two different forms: a Qbfs polynomial and a Qcon polynomial. In Embodiment 1, aspherical surface types are defined for the first lens 311 to the fourth lens 312c by using the Qbfs polynomial. An aspherical surface is defined by using the Qbfs polynomial. A characteristic quantity is an rms slope offset from a best-fit spherical surface to an aspherical surface. A formula is as follows:

$$z(r) = \frac{c_{bfs}\, r^2}{1 + \sqrt{1 - c^2{}_{bfs}\, r^2}} + \frac{u^2(1 - u^2)}{\sqrt{1 - c^2{}_{bfs}\, r_{\mathrm{n}}^2 u^2}} \sum_{\mathrm{m}=0}^{M} a_m Q_m^{bfs}(u_2)$$

.

In the foregoing formula, z represents a rise of an aspherical surface, r represents a distance between a point on an aspherical curved surface and the optical axis O, $r_{\mathrm{n}}$ represents a normalizing curvature, u represents $r/r_{\mathrm{n}}$, $a_m$ represents an $m^{th}$-order aspherical coefficient, $c_{bfs}$ is an aspherical vertex curvature, and $Q_m$ represents an $m^{th}$-order Qbfs polynomial.

An aspherical surface type is defined for the fifth lens 312d by using a Qcon polynomial. An aspherical surface based on a recessed offset from a conic section is defined by using the Qcon polynomial. A formula is as follows:

$$z(r) = \frac{cr^2}{1 + \sqrt{1 + \varepsilon c^2 r^2}} + u^{\varphi} \sum_{\mathrm{m}=0}^{M} a_m Q_m^{con}(u_2)$$

.

In the foregoing formula, z represents a rise of an aspherical surface, r represents a distance between a point on an aspherical curved surface and the optical axis O, u represents $r/r_{\mathrm{n}}$, $a_m$ represents an $m^{th}$-order aspherical coefficient, c is an aspherical vertex curvature, and $Q_m$ represents an $m^{th}$-order Qcon polynomial.

It may be understood that a manner of defining each aspherical surface type is not limited thereto. In another embodiment, the first lens 311 to the fifth lens 312d may be alternatively all defined by using the Qbfs polynomial or the Qcon polynomial.

Table 1-3 shows surface type coefficients of each aspherical lens surface in Embodiment 1. Herein, K is a quadric constant, and $A_0$, $A_1$, $A_2$, $A_3$, $A_4$, $A_5$, $A_6$, $A_7$, and $A_8$ are respectively a zeroth-order aspherical coefficient, a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 1-3: Surface type coefficients of each aspherical lens surface in Embodiment 1**

| Surface number | K | Stand ard radius | A0 | A1 | A2 | A3 | A4 | A5 | A6 | A7 | A8 |
|---|---|---|---|---|---|---|---|---|---|---|---|
| 1 | -4.914 E+01 | 5.417 E+00 | -7.275 E-01 | 6.446 E-03 | -9.853 E-03 | 3.518 E-03 | 2.084 E-03 | -1.454 E-04 | | | |
| 2 | -5.580 E-01 | 6.830 E+00 | 8.682 E-02 | 1.418 E-02 | 4.336 E-03 | 5.843 E-03 | -2.428 E-03 | -1.557 E-03 | | | |
| 3 | -3.308 E+00 | 1.943 E+00 | -2.353 E-02 | 2.797 E-03 | -5.180 E-04 | 6.183 E-05 | 2.627 E-06 | -2.401 E-06 | | | |
| 4 | -5.580 E-01 | 6.830 E+00 | 8.682 E-02 | 1.418 E-02 | 4.336 E-03 | 5.843 E-03 | -2.428 E-03 | -1.557 E-03 | | | |
| 5 | 0.000 E+00 | 1.137 E+00 | 2.432 E-01 | -1.407 E-02 | 5.035 E-03 | -3.715 E-04 | 2.517 E-04 | 2.948 E-05 | -1.075 E-05 | -2.051 E-05 | -5.23E -06 |
| 6 | 0.000 E+00 | 2.239 E+00 | 1.980 E+00 | -3.995 E-01 | 9.388 E-02 | -2.305 E-03 | -4.056 E-02 | -2.351 E-02 | 2.386 E-03 | -1.830 E-03 | -7.39E -04 |
| 7 | 0.000 E+00 | 1.219 E+00 | -6.324 E-01 | -4.719 E-02 | -2.639 E-02 | -7.922 E-03 | 2.260 E-03 | 3.657 E-03 | 2.061 E-03 | 6.795 E-04 | 1.24E -04 |

(continued)

| Surface number | K | Stand ard radius | A0 | A1 | A2 | A3 | A4 | A5 | A6 | A7 | A8 |
|---|---|---|---|---|---|---|---|---|---|---|---|
| 8 | 0.000 E+00 | 1.361 E+00 | -6.233 E-01 | 1.063 E-01 | 1.503 E-02 | -4.879 E-03 | -9.255 E-03 | -8.174 E-03 | -4.770 E-03 | -1.775 E-03 | -3.62E-04 |
| 9 | 0.000 E+00 | 1.760 E+00 | -5.971 E-01 | 9.137 E-02 | 4.458 E-02 | 7.643 E-03 | -2.458 E-02 | -1.389 E-02 | 2.730 E-03 | 6.318 E-03 | 1.55E-03 |
| 10 | 0.000 E+00 | 2.076 E+00 | -2.818 E-01 | -2.536 E-01 | -1.646 E-01 | 1.437 E-02 | -2.195 E-02 | -3.747 E-03 | -1.427 E-02 | -9.502 E-03 | -4.22E-03 |
| 11 | 0.000 E+00 | 2.442 E+00 | -6.016 E-01 | -2.362 E-01 | 1.152 E-02 | -2.578 E-02 | 6.550 E-02 | 1.456 E-02 | 2.609 E-02 | -2.083 E-03 | 1.76E-02 |
| 12 | 0.000 E+00 | 2.652 E+00 | -1.081 E+00 | 4.577 E-01 | 2.232 E-02 | 1.373 E-01 | -2.029 E-01 | 9.983 E-02 | 5.960 E-02 | -4.648 E-02 | 2.30E-02 |

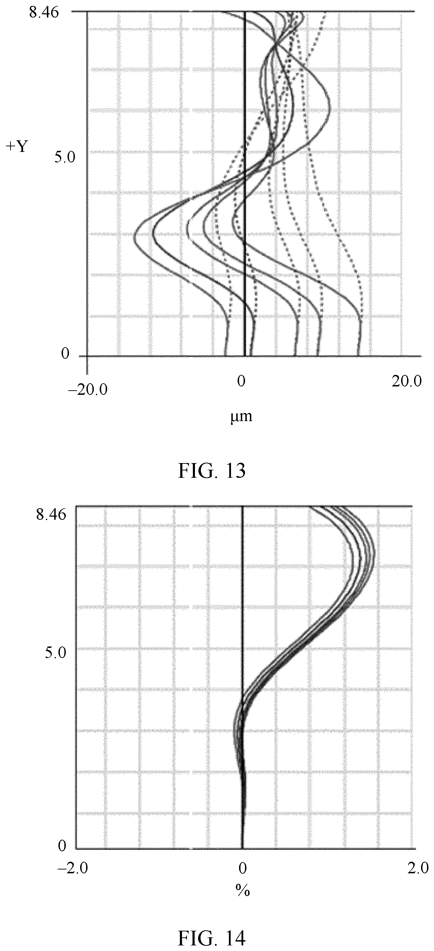

With reference to FIG. 13 and FIG. 14, FIG. 13 is a field curvature diagram of the lens 31 shown in FIG. 12, and FIG. 14 is a distortion diagram of the lens 31 shown in FIG. 12. FIG. 13 and FIG. 14 respectively show a field curvature and a distortion in a focal length state in which a focal length f is 14 mm, an aperture coefficient FNO is 2.2, and a field of view is 16.5°. It may be learned from FIG. 13 that a field curvature of the lens 31 is within 0.04 mm, and presents a relative contraction state. It may be learned from FIG. 14 that a distortion of the lens 31 is less than 1.6%. In this way, it is ensured that an image captured by the lens 31 is bent or flat, and there is no visible distortion.

**Embodiment 2**

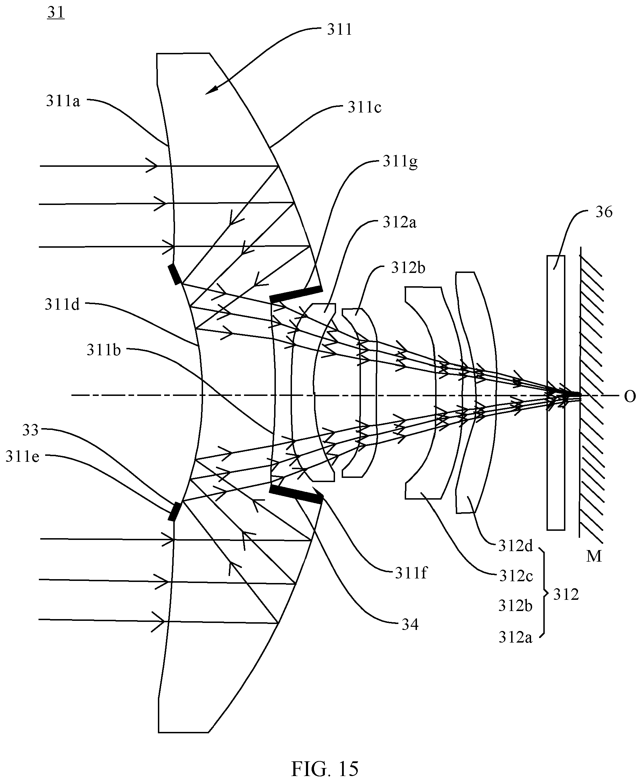

With reference to FIG. 15, FIG. 15 is a diagram of a structure of a lens 31 according to some other embodiments of this application. Solid lines with arrows in FIG. 15 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, and a fifth lens 312d that are sequentially disposed along the optical axis O from the object side to the image side.
The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.
The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex, and the second refracting surface 311b is convex. A recessed part 311f is disposed at an image-side surface of the first lens 311, and the second refracting surface 311b is formed on a bottom wall of the recessed part 311f. The second refracting surface 311b is connected to the first reflecting surface 311c through a second transition surface 311g. A light-shielding structure 34 is disposed on the second transition surface 311g. An intersection point between the second refracting surface 311b and the optical axis O does not overlap an intersection point between the optical axis O and a surface at which the first reflecting surface 311c is located. The second refracting surface 311b and the first reflecting surface 311c may share an aspherical parameter, or may not share an aspherical parameter.
A part of the second lens 312a is located in the recessed part 311f, and remaining lenses in the second lens group 312 are all located outside the recessed part 311f. Specifically, a part of an outer edge of the second lens 312a is located outside the recessed part 311f. In this way, this helps fasten the second lens 312a to an inner wall surface of a lens barrel 35.

A focal power of the first lens 311 is positive. A focal power of the second lens 312a is negative. A focal power of the third lens 312b is negative. A focal power of the fourth lens 312c is positive. A focal power of the fifth lens 312d is negative.

Table 2-1 shows optical parameters of the lens 31 in Embodiment 2.

**Table 2-1: Optical parameters of the lens 31 in Embodiment 2**

|  | Optical parameters |
|---|---|
| Effective focal length (f) | 14 mm |
| Field of view (FVO) | 16.5° |
| Aperture coefficient (FNO) | 2.1 |
| Total track length (TTL) | 6.1 mm |
| Focal length of the first lens (LEF1) | 7.2 mm |
| Focal length of the second lens group (LEF2) | -2.58 mm |
| Radius of a maximum image circle (Imgh) | 2.15 mm |
| Maximum outside diameter of the first lens (D) | 8.93 mm |

Specifically, in this embodiment, the effective focal length f of the lens 31 is 14 mm, the field of view FVO is 16.5°, and the aperture coefficient FNO is 2.1. In other words, f/EPD=2.1. The total track length, that is, a distance TTL from the object-side surface of the first lens 311 to an image plane M on the optical axis O is 6.1 mm. The focal length of the first lens 311: LEF1 is 7.2 mm. The focal length of the second lens group 312: LEF2 is -2.58. The radius of the maximum image circle: Imgh is 2.15 mm. Herein, LEF1/LEF2=-2.79, TTL/f=0.44, Imgh/TTL=0.15, LEF1/f=0.51, LEF2/f=-0.18, and Imgh/D=0.24.

Table 2-2 shows specific parameters of each element of the lens 31 in Embodiment 2. A physical meaning represented by each parameter is the same as that in Table 1-2. Details are not described herein again.

**Table 2-2: Specific parameters of each element of the lens 31 in Embodiment 2**

| Embodiment 2 | | | | | | | | | |
|---|---|---|---|---|---|---|---|---|---|
| f=14 mm FNO=2.1 FOV=16.5° TTL=6.1 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |
| 1 | Object-side edge region of the first lens | Aspherical surface | 48.639 | 2.400 | Plastic | 1.54 | 56.1 | 7.2 | 7.2 |
| 2 | Image-side edge region of the first lens (first reflecting surface) | Aspherical surface | -7.088 | -1.959 | Mirror | | | | |
| 3 | Object-side central region of the first lens (second reflecting surface) | Aspherical surface | -4.016 | 1.100 | Mirror | | | | |
| 4 | Image-side central region of the first lens | Aspherical surface | -7.116 | 0.000 | | | | | |

(continued)

| Embodiment 2 | | | | | | | | | |
|---|---|---|---|---|---|---|---|---|---|
| f=14 mm FNO=2.1 FOV=16.5° TTL=6.1 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |
| Diaphragm | Diaphrag m | Spherical surface | Infinity | 0.106 | | | | | |
| 5 | Second lens | Aspherical surface | -16.058 | 0.333 | Plastic | 1.54 | 56.1 | -6.07 | -2.58 |
| 6 | | Aspherical surface | 4.212 | 0.826 | | | | | |
| 7 | Third lens | Aspherical surface | 5.349 | 0.250 | Plastic | 1.67 | 19.20 | -34.84 | |
| 8 | | Aspherical surface | 4.281 | 0.889 | | | | | |
| 9 | Fourth lens | Aspherical surface | 144.474 | 0.390 | Plastic | 1.57 | 37.30 | 33.62 | |
| 10 | | Aspherical surface | -22.127 | 0.217 | | | | | |
| 11 | Fifth lens | Aspherical surface | -40.575 | 0.305 | Plastic | 1.54 | 56.1 | -6.19 | |
| 12 | | Aspherical surface | -7.977 | 0.792 | | | | | |
| 13 | Filter | Spherical surface | Infinity | 0.210 | Glass | 1.52 | 64.2 | | |
| 14 | | Spherical surface | Infinity | 0.240 | | | | | |
| Image plane | Image plane | Spherical surface | Infinity | 0.0000 | | | | | |
| Note: The reference wavelength is 587 nm. | | | | | | | | | |

In this embodiment, a central thickness e2 of the first lens 311 is 1.1 mm, a maximum outside diameter D of the first lens 311 is 8.93 mm, and d/D=0.12. In this way, this helps implement molding and processing of the first lens 311 and increase a molding or processing yield of the first lens 311.

In Embodiment 2, an object-side surface and an image-side surface of any one of the first lens 311, the second lens 312a, the third lens 312b, the fourth lens 312c, and the fifth lens 312d are both aspherical surfaces. Aspherical surface types are defined for the first lens 311 to the fourth lens 312c by using a Qbfs polynomial. A formula is as follows:

$$z(r) = \frac{c_{bfs} r^2}{1 + \sqrt{1 - c^2_{bfs} r^2}} + \frac{u^2(1 - u^2)}{\sqrt{1 - c^2_{bfs} r_n^2 u^2}} \sum_{m=0}^{M} a_m Q_m^{bfs}(u_2) .$$

An aspherical surface type is defined for the fifth lens 312d by using a Qcon polynomial. A formula is as follows:

$$z(r) = \frac{cr^2}{1 + \sqrt{1 + \varepsilon c^2 r^2}} + u^\varphi \sum_{m=0}^{M} a_m Q_m^{con}(u_2)$$

.

Table 2-3 shows surface type coefficients of each aspherical lens surface in Embodiment 2. Herein, K is a quadric constant, and $A_1$, $A_2$, $A_3$, $A_4$, $A_5$, $A_6$, $A_7$, and $A_8$ are respectively a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 2-3: Surface type coefficients of each aspherical lens surface in Embodiment 2**

| Surface number | K | Standard radius | A0 | A1 | A2 | A3 | A4 | A5 | A6 | A7 | A8 |
|---|---|---|---|---|---|---|---|---|---|---|---|
| 1 | 6.346E+01 | 5.190E+00 | -8.359E-01 | 5.465E-02 | -2.957E-02 | 1.582E-02 | 1.160E-02 | 3.261E-03 | 1.013E-03 | 4.230E-04 | 1.21E-04 |
| 2 | -4.751E-01 | 5.746E+00 | 5.421E-02 | 1.909E-02 | -6.747E-03 | 1.464E-02 | 5.732E-03 | 1.667E-03 | 1.531E-03 | 1.030E-03 | 2.60E-04 |
| 3 | -2.928E+00 | 2.120E+00 | -3.497E-02 | 1.241E-02 | -2.895E-03 | 1.508E-03 | 5.149E-04 | 3.512E-04 | 2.203E-04 | 9.648E-05 | 3.93E-05 |
| 4 | -1.958E+00 | 4.157E+00 | 1.564E+00 | -6.736E-01 | 1.966E-01 | -4.302E-02 | -3.738E-02 | 7.661E-02 | 2.514E-02 | -2.834E-02 | -1.44E-02 |
| 5 | 0.000E+00 | 1.165E+00 | 2.310E-01 | -9.540E-03 | 3.560E-03 | -3.430E-04 | 1.410E-04 | -2.153E-05 | 5.906E-06 | -1.915E-06 | 1.08E-06 |
| 6 | 0.000E+00 | 2.351E+00 | 1.987E+00 | -3.009E-01 | -1.670E-01 | -4.071E-02 | -1.261E-03 | -2.156E-02 | -7.266E-04 | 6.723E-03 | 3.28E-03 |
| 7 | 0.000E+00 | 1.281E+00 | -6.225E-01 | -4.626E-02 | -3.879E-03 | 5.724E-03 | 4.366E-03 | 1.983E-03 | 7.733E-04 | 2.741E-04 | 5.11E-05 |
| 8 | 0.000E+00 | 1.466E+00 | -7.183E-01 | 7.380E-02 | 2.409E-02 | 2.153E-03 | -7.386E-03 | -6.567E-03 | -3.116E-03 | -9.777E-04 | -1.90E-04 |
| 9 | 0.000E+00 | 1.953E+00 | -1.897E+00 | 1.120E-01 | 9.828E-03 | 2.479E-02 | 1.411E-02 | -1.490E-02 | 1.482E-03 | 9.495E-03 | 3.16E-03 |
| 10 | 0.000E+00 | 2.843E+00 | -4.965E-01 | 5.379E-01 | -2.804E-01 | -1.867E-01 | -1.399E-01 | 8.049E-02 | 4.672E-02 | -3.249E-02 | -1.79E-02 |
| 11 | 0.000E+00 | 2.590E+00 | -7.107E-01 | -2.689E-01 | -1.520E-02 | -5.248E-02 | 3.974E-02 | 4.624E-04 | 2.966E-02 | 1.000E-02 | 1.48E-02 |
| 12 | 0.000E+00 | 2.602E+00 | -1.113E+00 | 4.144E-01 | -3.083E-02 | 1.046E-01 | -2.065E-01 | 1.021E-01 | 5.487E-02 | -5.292E-02 | 3.02E-02 |

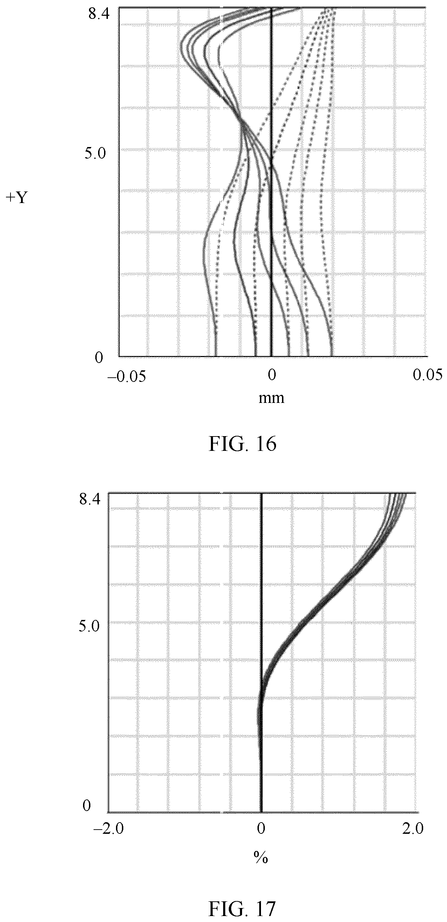

With reference to FIG. 16 and FIG. 17, FIG. 16 is a field curvature diagram of the lens 31 shown in FIG. 15, and FIG. 17 is a distortion diagram of the lens 31 shown in FIG. 15. It may be learned from FIG. 16 that a field curvature of the lens 31 is within 0.06 mm, and presents a relative contraction state. It may be learned from FIG. 17 that a distortion of the lens 31 is less than 2%. In this way, it is ensured that an image captured by the lens 31 is bent and flat, and there is no visible distortion.

## Embodiment 3

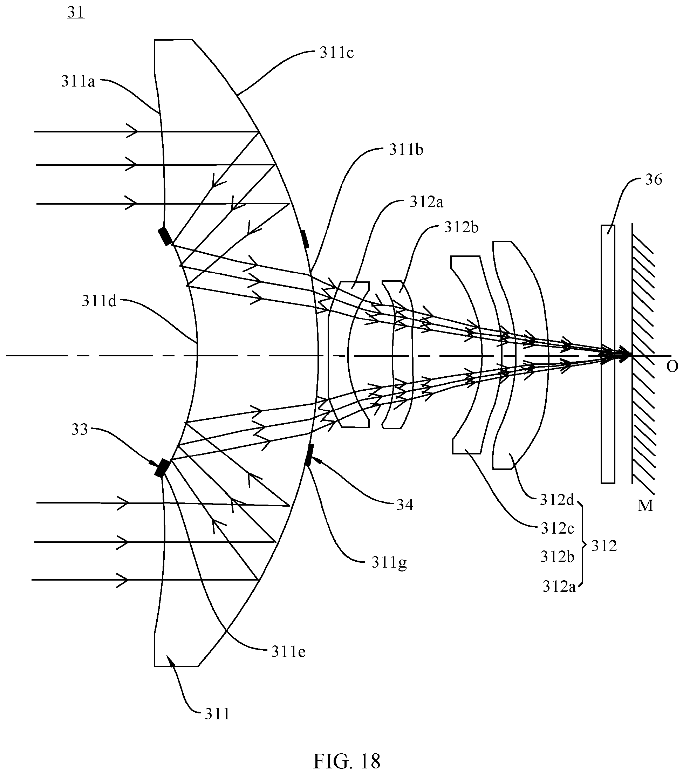

With reference to FIG. 18, FIG. 18 is a diagram of a structure of a lens 31 according to some other embodiments of this application. Solid lines with arrows in FIG. 18 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, and a fifth lens 312d that are sequentially disposed along the optical axis O from the object side to the image side.

The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.

The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex. The second refracting surface 311b is convex. The first reflecting surface 311c and the second refracting surface 311b are coplanar. The first reflecting surface 311c is connected to the second refracting surface 311b through a second transition surface 311g. A light-shielding structure 34 is disposed on the second transition surface 311g.

A focal power of the first lens 311 is positive. A focal power of the second lens 312a is negative. A focal power of the third lens 312b is negative. A focal power of the fourth lens 312c is positive. A focal power of the fifth lens 312d is negative.

Table 3-1 shows optical parameters of the lens 31 in Embodiment 3.

**Table 3-1: Optical parameters of the lens 31 in Embodiment 3**

|  | Optical parameters |
| --- | --- |
| Effective focal length (f) | 16 mm |
| Field of view (FVO) | 14.5° |
| Aperture coefficient (FNO) | 2.4 |
| Total track length (TTL) | 7.1 mm |
| Focal length of the first lens (LEF1) | 7.82 mm |
| Focal length of the second lens group (LEF2) | -2.66 mm |
| Radius of a maximum image circle (Imgh) | 2.1 mm |
| Maximum outside diameter of the first lens (D) | 9.09 mm |

Specifically, in this embodiment, the effective focal length f of the lens 31 is 16 mm, the field of view FVO is 14.5°, and the aperture coefficient FNO is 2.4. In other words, f/EPD=2.4. The total track length, that is, a distance TTL from the object-side surface of the first lens 311 to an image plane M on the optical axis O is 7.1 mm. The focal length of the first lens 311: LEF1 is 7.82 mm. The focal length of the second lens group 312: LEF2 is -2.66 mm. The radius of the maximum image circle: Imgh is 2.1 mm. Herein, LEF1/LEF2=-2.94, TTL/f=0.44, Imgh/TTL=0.13, LEF1/f=0.49, LEF2/f=-0.17, and Imgh/D=0.23.

Table 3-2 shows specific parameters of each element of the lens 31 in Embodiment 3. A physical meaning represented by each parameter is the same as that in Table 1-2. Details are not described herein again.

**Table 3-2: Specific parameters of each element of the lens 31 in Embodiment 3**

| Surface number | Surface name | Surface type | Curvature radius | Thickness | Material | Refractive index | Abbe number | Focal length | Combined focal length |
|---|---|---|---|---|---|---|---|---|---|
| | Embodiment 3 | | | | | | | | |
| | f=16 mm FNO=2.4 FOV=14.5° TTL=7.1 mm | | | | | | | | |
| Object plane | Object plane | Spherical surface | Infinity | Infinity | | | | | |
| 1 | Object-side edge region of the first lens | Aspherical surface | 50.651 | 2.400 | Plastic | 1.54 | 55.7 | 7.82 | 7.82 |
| 2 | Image-side edge region of the first lens (first reflecting surface) | Aspherical surface | -7.116 | -1.926 | Mirror | | | | |
| 3 | Object-side central region of the first lens (second reflecting surface) | Aspherical surface | -4.070 | 1.926 | Mirror | | | | |
| 4 | Image-side central region of the first lens | Aspherical surface | -7.116 | 0.000 | | | | | |
| Diaphragm | Diaphragm | Spherical surface | Infinity | 0.077 | | | | | |
| 5 | Second lens | Aspherical surface | -13.810 | 0.307 | Plastic | 1.54 | 56.1 | -5.85 | -2.66 |
| 6 | | Aspherical surface | 4.189 | 0.654 | | | | | |
| 7 | Third lens | Aspherical surface | 4.241 | 0.300 | Plastic | 1.67 | 19.20 | -18.71 | |
| 8 | | Aspherical surface | 3.089 | 1.078 | | | | | |
| 9 | Fourth lens | Aspherical surface | -4.585 | 0.300 | Plastic | 1.57 | 37.30 | 27.92 | |
| 10 | | Aspherical surface | -3.646 | 0.216 | | | | | |
| 11 | Fifth lens | Aspherical surface | -10.857 | 0.476 | Plastic | 1.54 | 56.1 | -7.75 | |
| 12 | | Aspherical surface | -3.795 | 0.842 | | | | | |

(continued)

| Embodiment 3 | | | | | | | | | |
|---|---|---|---|---|---|---|---|---|---|
| f=16 mm FNO=2.4 FOV=14.5° TTL=7.1 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |
| 13 | Filter | Spherical surface | Infinity | 0.210 | Glass | 1.52 | 64.2 | | |
| 14 | | Spherical surface | Infinity | 0.240 | | | | | |
| Image plane | Image plane | Spherical surface | Infinity | 0.0000 | | | | | |
| Note: The reference wavelength is 587 nm. | | | | | | | | | |

In addition, in this embodiment, a central thickness e2 of the first lens 311 is 1.926 mm, a maximum outside diameter D of the first lens 311 is 9.09 mm, and d/D=0.21. In this way, this helps implement molding and processing of the first lens 311 and increase a molding or processing yield of the first lens 311.

In Embodiment 3, an object-side surface and an image-side surface of any one of the first lens 311, the second lens 312a, the third lens 312b, the fourth lens 312c, and the fifth lens 312d are both aspherical surfaces. Aspherical surface types are defined for the first lens 311 to the fourth lens 312c by using a Qbfs polynomial. A formula is as follows:

$$z(r) = \frac{c_{bfs}r^2}{1 + \sqrt{1 - c^2{}_{bfs}r^2}} + \frac{u^2(1 - u^2)}{\sqrt{1 - c^2{}_{bfs}r_{\mathrm{n}}{}^2 u^2}} \sum_{\mathrm{m}=0}^{M} a_m Q_m^{bfs}(u_2)$$

An aspherical surface type is defined for the fifth lens 312d by using a Qcon polynomial. A formula is as follows:

$$z(r) = \frac{cr^2}{1 + \sqrt{1 + \varepsilon c^2 r^2}} + u^\varphi \sum_{\mathrm{m}=0}^{M} a_m Q_m^{\mathrm{con}}(u_2)$$

Table 3-3 shows surface type coefficients of each aspherical lens surface in Embodiment 3. Herein, K is a quadric constant, and $A_1$, $A_2$, $A_3$, $A_4$, $A_5$, $A_6$, $A_7$, and $A_8$ are respectively a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 3-3: Surface type coefficients of each aspherical lens surface in Embodiment 3**

| Surface number | K | Standard radius | A0 | A1 | A2 | A3 | A4 | A5 | A6 | A7 | A8 |
|---|---|---|---|---|---|---|---|---|---|---|---|---|
| 1 | -2.292 E+01 | 5.470 E+00 | -7.949 E-01 | -1.491 E-02 | -2.196 E-02 | -1.709 E-04 | -1.748 E-04 | -3.071 E-04 | | | |
| 2 | -5.825 E-01 | 7.464 E+00 | 6.350 E-02 | -8.050 E-04 | 3.484 E-03 | 9.536 E-03 | -4.013 E-03 | -1.382 E-03 | | | |

(continued)

| Surface number | K | Standard radius | A0 | A1 | A2 | A3 | A4 | A5 | A6 | A7 | A8 |
|---|---|---|---|---|---|---|---|---|---|---|---|
| 3 | -3.204 E+00 | 1.784 E+00 | -2.409 E-02 | 3.240 E-03 | -4.419 E-04 | 4.564 E-05 | -2.011 E-06 | -5.490 E-08 | | | |
| 4 | -5.825 E-01 | 7.464 E+00 | 6.350 E-02 | -8.050 E-04 | 3.484 E-03 | 9.536 E-03 | -4.013 E-03 | -1.382 E-03 | | | |
| 5 | 0.000 E+00 | 1.202 E+00 | 2.867 E-01 | -2.051 E-02 | 5.261 E-03 | -5.012 E-04 | 3.332 E-04 | 7.652 E-05 | 4.712 E-05 | 1.597 E-05 | 1.71E-06 |
| 6 | 0.000 E+00 | 2.240 E+00 | 1.670 E+00 | -4.786 E-01 | 9.447 E-02 | -1.042 E-02 | -3.879 E-02 | -1.055 E-02 | 5.550 E-03 | -5.158 E-03 | -2.80E-03 |
| 7 | 0.000 E+00 | 1.272 E+00 | -6.305 E-01 | -3.696 E-02 | -3.520 E-02 | -1.433 E-02 | -1.716 E-03 | 1.624 E-03 | 1.322 E-03 | 4.679 E-04 | 9.75E-05 |
| 8 | 0.000 E+00 | 1.374 E+00 | -6.401 E-01 | 6.625 E-02 | -6.301 E-03 | -3.521 E-03 | -2.106 E-03 | -1.343 E-03 | -7.850 E-04 | -3.373 E-04 | -6.99E-05 |
| 9 | 0.000 E+00 | 1.842 E+00 | -5.920 E-01 | 1.651 E-01 | 3.536 E-02 | -7.725 E-03 | -4.133 E-02 | -2.638 E-02 | 2.552 E-03 | 6.172 E-03 | 7.43E-04 |
| 10 | 0.000 E+00 | 2.040 E+00 | -1.288 E-01 | -1.610 E-01 | -2.094 E-01 | -2.438 E-02 | -4.499 E-02 | -1.944 E-02 | -1.150 E-02 | -9.642 E-03 | -5.37E-03 |
| 11 | 0.000 E+00 | 2.523 E+00 | -5.868 E-01 | -2.274 E-01 | 2.384 E-02 | -2.818 E-02 | 7.095 E-02 | 1.495 E-02 | 2.626 E-02 | -3.596 E-03 | 2.18E-02 |
| 12 | 0.000 E+00 | 2.646 E+00 | -1.051 E+00 | 4.920 E-01 | 5.074 E-02 | 1.491 E-01 | -2.052 E-01 | 9.286 E-02 | 5.835 E-02 | -4.272 E-02 | 2.14E-02 |

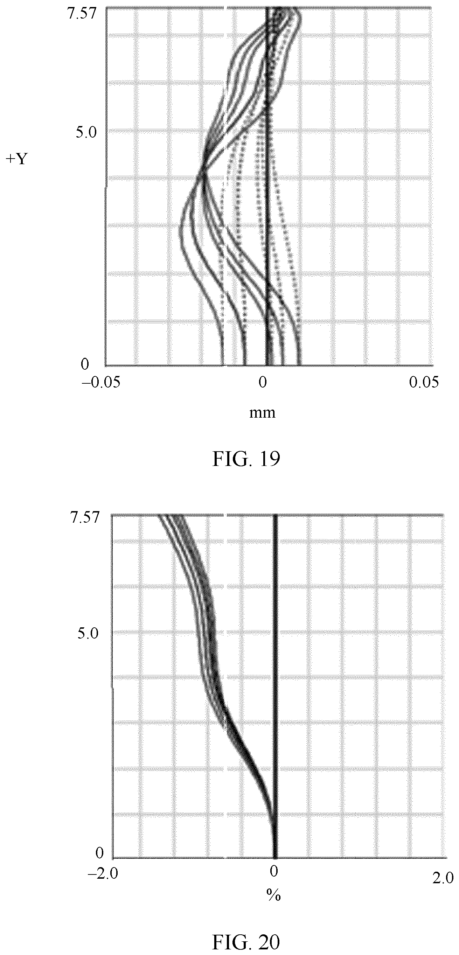

With reference to FIG. 19 and FIG. 20, FIG. 19 is a field curvature diagram of the lens 31 shown in FIG. 18, and FIG. 20 is a distortion diagram of the lens 31 shown in FIG. 18. It may be learned from FIG. 19 that a field curvature of the lens 31 is within 0.1 mm, and presents a relative contraction state. It may be learned from FIG. 20 that a distortion of the lens 31 is less than 1.6%. In this way, it is ensured that an image captured by the lens 31 is bent and flat, and there is no visible distortion.

**Embodiment 4**

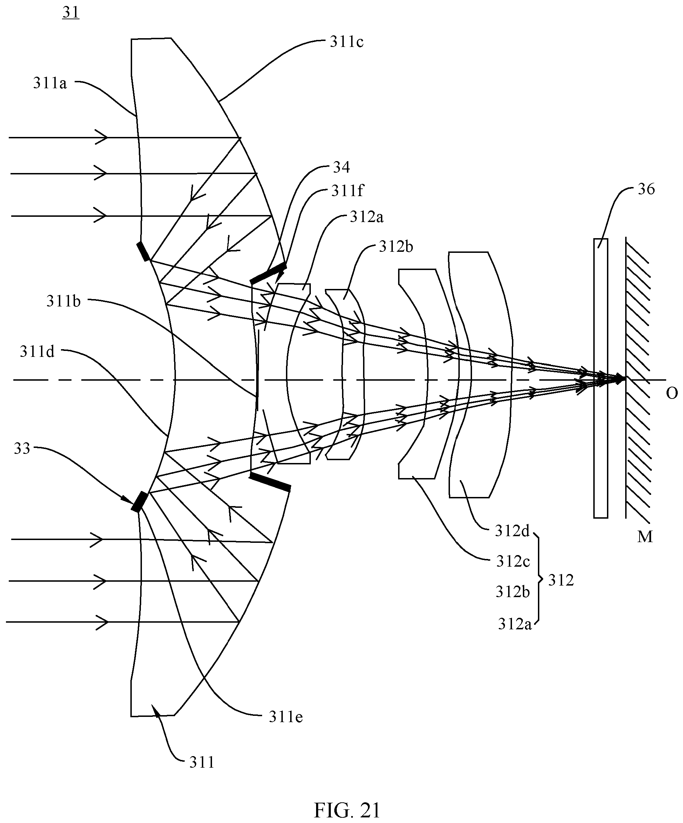

With reference to FIG. 21, FIG. 21 is a diagram of a structure of a lens 31 according to some other embodiments of this application. Solid lines with arrows in FIG. 21 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, and a fifth lens 312d that are sequentially disposed along the optical axis O from the object side to the image side.

The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.

The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex, and the second refracting surface 311b is convex. A recessed part 311f is disposed at an image-side surface of the first lens 311, and the second refracting surface 311b is formed on a bottom wall of the recessed part 311f. The second refracting surface 311b is connected to the first reflecting surface 311c through a second transition surface 311g. A light-shielding structure 34 is disposed on the second transition surface 311g. An intersection point between the second refracting surface 311b and the optical axis O does not overlap an intersection point between the optical axis O and a surface at which the first reflecting surface 311c is located. The second refracting surface 311b and the first reflecting surface 311c may share an aspherical parameter, or may not share an aspherical parameter.

A part of the second lens 312a is located in the recessed part 311f, and remaining lenses in the second lens group 312 are all located outside the recessed part 311f. Specifically, a part of an outer edge of the second lens 312a is located outside the recessed part 311f. In this way, this helps fasten the second lens 312a to an inner wall surface of a lens barrel 35.

A focal power of the first lens 311 is positive. A focal power of the second lens 312a is negative. A focal power of the third lens 312b is negative. A focal power of the fourth lens 312c is positive. A focal power of the fifth lens 312d is negative.

Table 4-1 shows optical parameters of the lens 31 in Embodiment 4.

**Table 4-1: Optical parameters of the lens 31 in Embodiment 4**

|  | Optical parameters |
|---|---|
| Effective focal length (f) | 16 mm |
| Field of view (FVO) | 14.5° |
| Aperture coefficient (FNO) | 2.35 |
| Total track length (TTL) | 6.8 mm |
| Focal length of the first lens (LEF1) | 7.39 mm |
| Focal length of the second lens group (LEF2) | -2.43 mm |
| Radius of a maximum image circle (Imgh) | 2.11 mm |
| Maximum outside diameter of the first lens (D) | 8.88 mm |

Specifically, in this embodiment, the effective focal length f of the lens 31 is 16 mm, the field of view FVO is 14.5°, and the aperture coefficient FNO is 2.25. In other words, f/EPD=2.35. The total track length, that is, a distance TTL from the object-side surface of the first lens 311 to an image plane M on the optical axis O is 6.8 mm. The focal length of the first lens 311: LEF1 is 7.39 mm. The focal length of the second lens group 312: LEF2 is -2.43 mm. The radius of the maximum image circle: Imgh is 2.11 mm. Herein, LEF1/LEF2=-3.04, TTL/f=0.43, Imgh/TTL=0.13, LEF1/f=0.46, LEF2/f=-0.15, and Imgh/D=0.24.

Table 4-2 shows specific parameters of each element of the lens 31 in Embodiment 4. A physical meaning represented by each parameter is the same as that in Table 1-2. Details are not described herein again.

**Table 4-2: Specific parameters of each element of the lens 31 in Embodiment 4**

| Embodiment 4 | | | | | | | | |
|---|---|---|---|---|---|---|---|---|
| f=16 mm FNO=2.35 FOV=14.5° TTL=6.8 mm | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |

(continued)

| Embodiment 4 | | | | | | | | | |
| --- | --- | --- | --- | --- | --- | --- | --- | --- | --- |
| f=16 mm FNO=2.35 FOV=14.5° TTL=6.8 mm | | | | | | | | | |
| Surface number | Surface name | Surface type | Curvature radius | Thickness | Material | Refractive index | Abbe number | Focal length | Combined focal length |
| 1 | Object-side edge region of the first lens | Aspherical surface | 49.111 | 2.462 | Plastic | 1.54 | 56.1 | 7.39 | 7.39 |
| 2 | Image-side edge region of the first lens (first reflecting surface) | Aspherical surface | -7.097 | -1.957 | Mirror | | | | |
| 3 | Object-side central region of the first lens (second reflecting surface) | Aspherical surface | -4.001 | 1.200 | Mirror | | | | |
| 4 | Image-side central region of the first lens | Aspherical surface | -7.221 | 0.000 | | | | | |
| Diaphragm | Diaphragm | Spherical surface | Infinity | 0.089 | | | | | |
| 5 | Second lens | Aspherical surface | -13.423 | 0.320 | Plastic | 1.54 | 56.1 | -5.93 | -2.43 |
| 6 | | Aspherical surface | 4.312 | 0.832 | | | | | |
| 7 | Third lens | Aspherical surface | 5.949 | 0.300 | Plastic | 1.67 | 19.20 | -30.84 | |
| 8 | | Aspherical surface | 4.539 | 0.936 | | | | | |
| 9 | Fourth lens | Aspherical surface | -79.283 | 0.450 | Plastic | 1.57 | 37.30 | 41.39 | |
| 10 | | Aspherical surface | -18.252 | 0.200 | | | | | |
| 11 | Fifth lens | Aspherical surface | -20.781 | 0.600 | Plastic | 1.54 | 56.1 | -6.09 | |
| 12 | | Aspherical surface | -6.986 | 0.911 | | | | | |
| 13 | Filter | Spherical surface | Infinity | 0.210 | Glass | 1.52 | 64.2 | | |
| 14 | | Spherical surface | Infinity | 0.240 | | | | | |

(continued)

| Embodiment 4 | | | | | | | | | |
| --- | --- | --- | --- | --- | --- | --- | --- | --- | --- |
| f=16 mm FNO=2.35 FOV=14.5° TTL=6.8 mm | | | | | | | | | |
| Surface number | Surface name | Surface type | Curvature radius | Thickness | Material | Refractive index | Abbe number | Focal length | Combined focal length |
| Image plane | Image plane | Spherical surface | Infinity | 0.0000 | | | | | |
| Note: The reference wavelength is 587 nm. | | | | | | | | | |

In addition, in this embodiment, a central thickness e2 of the first lens 311 is 1.2 mm, a maximum outside diameter D of the first lens 311 is 8.88 mm, and d/D=0.14. In this way, this helps implement molding and processing of the first lens 311 and increase a molding or processing yield of the first lens 311.

In Embodiment 4, an object-side surface and an image-side surface of any one of the first lens 311, the second lens 312a, the third lens 312b, the fourth lens 312c, and the fifth lens 312d are both aspherical surfaces. Aspherical surface types are defined for the first lens 311 to the fourth lens 312c by using a Qbfs polynomial. A formula is as follows:

$$z(r) = \frac{c_{bfs}r^2}{1 + \sqrt{1 - c^2{}_{bfs}r^2}} + \frac{u^2(1 - u^2)}{\sqrt{1 - c^2{}_{bfs}r_n^2 u^2}} \sum_{m=0}^{M} a_m Q_m^{bfs}(u_2)$$

An aspherical surface type is defined for the fifth lens 312d by using a Qcon polynomial. A formula is as follows:

$$z(r) = \frac{cr^2}{1 + \sqrt{1 + \varepsilon c^2 r^2}} + u^{\varphi} \sum_{m=0}^{M} a_m Q_m^{con}(u_2)$$

Table 4-3 shows surface type coefficients of each aspherical lens surface in Embodiment 4. Herein, K is a quadric constant, and $A_1$, $A_2$, $A_3$, $A_4$, $A_5$, $A_6$, $A_7$, and $A_8$ are respectively a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 4-3: Surface type coefficients of each aspherical lens surface in Embodiment 4**

| Surface number | K | Standard radius | A0 | A1 | A2 | A3 | A4 | A5 | A6 | A7 | A8 |
| --- | --- | --- | --- | --- | --- | --- | --- | --- | --- | --- | --- |
| 1 | 7.648 E+01 | 5.220 E+00 | - 8.162E -01 | 4.600 E-02 | - 3.052E -02 | 1.739 E-02 | 1.329 E-02 | 3.561 E-03 | 1.028 E-03 | 4.047 E-04 | 1.24E -04 |
| 2 | - 5.042 E-01 | 5.732 E+00 | 6.076E -02 | 1.925 E-02 | - 9.797E -03 | 1.501 E-02 | 6.132 E-03 | 1.276 E-03 | 1.263 E-03 | 9.654 E-04 | 2.59E -04 |
| 3 | - 2.756 E+00 | 2.091 E+00 | - 3.942E -02 | 1.517 E-02 | - 4.611E -03 | 7.199 E-04 | 4.159 E-05 | - 1.764 E-05 | 1.085 E-05 | 5.777 E-06 | 1.85E -06 |
| 4 | 6.208 E-01 | 4.190 E+00 | 1.245E +00 | - 6.012 E-01 | 1.691E -01 | - 2.885 E-02 | - 4.624 E-02 | 8.005 E-02 | 2.391 E-02 | - 1.805 E-02 | - 2.66E -02 |

(continued)

| Surface number | K | Standard radius | A0 | A1 | A2 | A3 | A4 | A5 | A6 | A7 | A8 |
|---|---|---|---|---|---|---|---|---|---|---|---|
| 5 | 0.000 E+00 | 1.167 E+00 | 2.357E -01 | - 9.258 E-03 | 3.954E -03 | - 5.713 E-04 | 1.945 E-04 | - 2.835 E-05 | 7.536 E-06 | - 2.117 E-06 | 8.35E -07 |
| 6 | 0.000 E+00 | 2.326 E+00 | 2.217E +00 | - 3.152 E-01 | - 1.640E -01 | - 4.447 E-02 | - 1.832 E-03 | - 2.409 E-02 | 2.933 E-03 | 7.037 E-03 | 2.93E -03 |
| 7 | 0.000 E+00 | 1.293 E+00 | - 6.150E -01 | - 3.952 E-02 | - 5.529E -03 | 3.633 E-03 | 4.392 E-03 | 2.542 E-03 | 9.519 E-04 | 2.264 E-04 | 2.13E -05 |
| 8 | 0.000 E+00 | 1.473 E+00 | - 6.953E -01 | 7.886 E-02 | 1.708E -02 | 2.150 E-03 | - 5.010 E-03 | - 5.775 E-03 | - 3.672 E-03 | - 1.437 E-03 | - 3.19E -04 |
| 9 | 0.000 E+00 | 1.913 E+00 | - 1.858E +00 | 5.763 E-02 | 2.144E -02 | 4.088 E-02 | 8.441 E-03 | - 1.681 E-02 | 3.300 E-03 | 1.281 E-02 | 4.12E -03 |
| 10 | 0.000 E+00 | 2.749 E+00 | - 2.413E -01 | 6.027 E-01 | - 2.664E -01 | - 1.833 E-01 | - 1.350 E-01 | 7.775 E-02 | 4.222 E-02 | - 2.753 E-02 | - 2.45E -02 |
| 11 | 0.000 E+00 | 2.573 E+00 | - 7.294E -01 | - 2.735 E-01 | - 1.745E -02 | - 5.381 E-02 | 3.870 E-02 | - 6.118 E-04 | 2.845 E-02 | 9.090 E-03 | 1.42E -02 |
| 12 | 0.000 E+00 | 2.749 E+00 | - 1.102E +00 | 4.193 E-01 | - 2.690E -02 | 1.074 E-01 | - 2.058 E-01 | 1.011 E-01 | 5.245 E-02 | - 5.645 E-02 | 2.53E -02 |

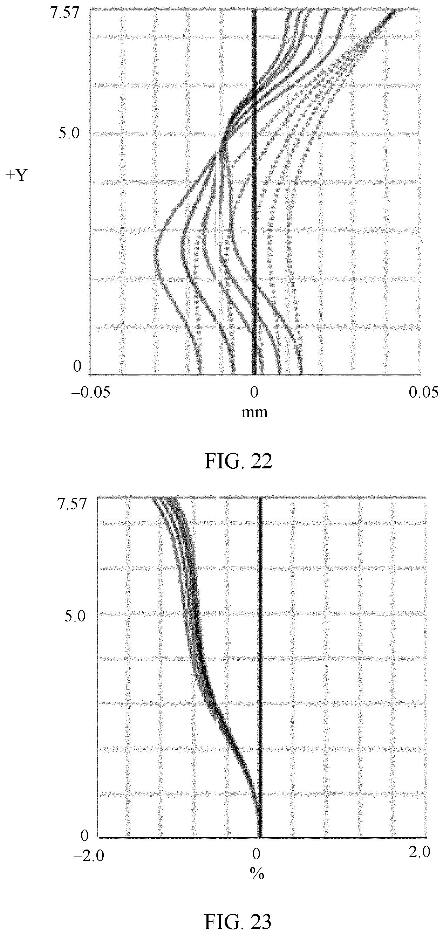

With reference to FIG. 22 and FIG. 23, FIG. 22 is a field curvature diagram of the lens 31 shown in FIG. 21, and FIG. 23 is a distortion diagram of the lens 31 shown in FIG. 21. It may be learned from FIG. 22 that a field curvature of the lens 31 is within 0.1 mm, and presents a relative contraction state. It may be learned from FIG. 23 that a distortion of the lens 31 is less than 1.6%. In this way, it is ensured that an image captured by the lens 31 is bent and flat, and there is no visible distortion.

**Embodiment 5**

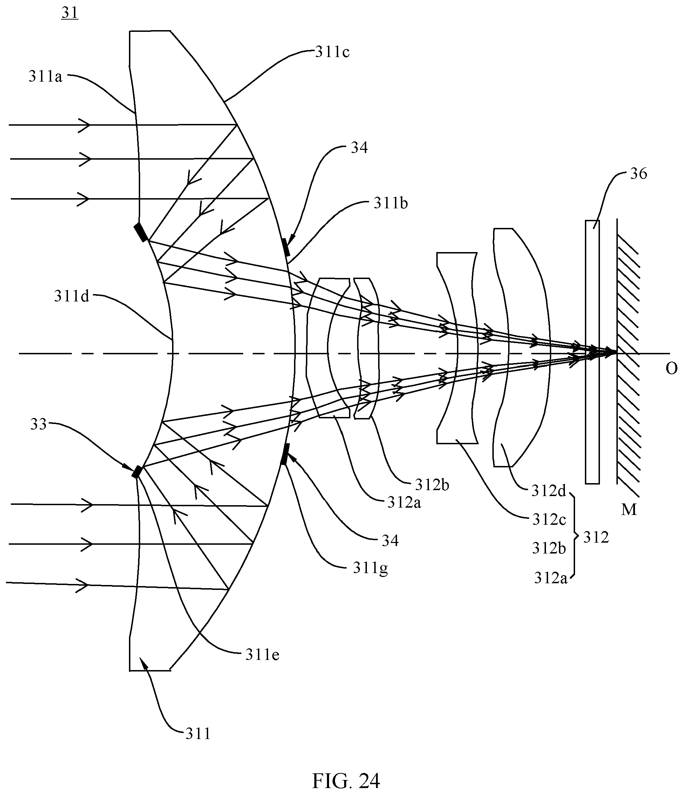

With reference to FIG. 24, FIG. 24 is a diagram of a structure of a lens 31 according to some other embodiments of this application. Solid lines with arrows in FIG. 24 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, and a fifth lens 312d that are sequentially disposed along the optical axis O from the object side to the image side.
The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.
The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex. The second refracting surface 311b is convex. The first reflecting surface 311c and the second refracting surface 311b are coplanar. The first reflecting surface 311c is connected to the second refracting surface 311b through a second transition surface 311g. A light-shielding structure 34 is disposed on the second transition surface 311g.

A focal power of the first lens 311 is positive. A focal power of the second lens 312a is negative. A focal power of the third lens 312b is positive. A focal power of the fourth lens 312c is negative. A focal power of the fifth lens 312d is negative.

Table 5-1 shows optical parameters of the lens 31 in Embodiment 5.

Table 5-1: Optical parameters of the lens 31 in Embodiment 5

|  | Optical parameters |
| --- | --- |
| Effective focal length (f) | 17 mm |
| Field of view (FVO) | 13.7° |
| Aperture coefficient (FNO) | 2.6 |
| Total track length (TTL) | 7.2 mm |
| Focal length of the first lens (LEF1) | 7.89 mm |
| Focal length of the second lens group (LEF2) | -2.22 mm |
| Radius of a maximum image circle (Imgh) | 2.1 mm |
| Maximum outside diameter of the first lens (D) | 8.95 mm |

Specifically, in this embodiment, the effective focal length f of the lens 31 is 17 mm, the field of view FVO is 13.7°, and the aperture coefficient FNO is 2.6. In other words, f/EPD=2.6. The total track length, that is, a distance TTL from the object-side surface of the first lens 311 to an image plane M on the optical axis O is 7.2 mm. The focal length of the first lens 311: LEF1 is 7.89 mm. The focal length of the second lens group 312: LEF2 is -2.22 mm. The radius of the maximum image circle: Imgh is 2.1 mm. Herein, LEF1/LEF2=-3.55, TTL/f=0.42, Imgh/TTL=0.12, LEF1/f=0.46, LEF2/f=-0.13, and Imgh/D=0.23.

Table 5-2 shows specific parameters of each element of the lens 31 in Embodiment 5. A physical meaning represented by each parameter is the same as that in Table 1-2. Details are not described herein again.

**Table 5-2: Specific parameters of each element of the lens 31 in Embodiment 5**

| Surface number | Surface name | Surface type | Curvature radius | Thickness | Material | Refractive index | Abbe number | Focal length | Combined focal length |
|---|---|---|---|---|---|---|---|---|---|
| Embodiment 5 | | | | | | | | | |
| f=17 mm FNO=2.6 FOV=13.7° TTL=7.2 mm | | | | | | | | | |
| Object plane | Object plane | Spherical surface | Infinity | Infinity | | | | | |
| 1 | Object-side edge region of the first lens | Aspherical surface | 49.917 | 2.420 | Glass | 1.52 | 64.1 | 7.89 | 7.89 |
| 2 | Image-side edge region of the first lens (first reflecting surface) | Aspherical surface | -7.109 | -1.931 | Mirror | | | | |
| 3 | Object-side central region of the first lens (second reflecting surface) | Aspherical surface | -4.064 | 1.931 | Mirror | | | | |
| 4 | Image-side central region of the first lens | Aspherical surface | -7.109 | 0.000 | | | | | |
| Diaphragm | Diaphragm | Spherical surface | Infinity | 0.098 | | | | | |
| 5 | Second lens | Aspherical surface | -15.651 | 0.308 | Plastic | 1.57 | 37.3 | -4.63 | -2.22 |
| 6 | | Aspherical surface | 3.206 | 0.475 | | | | | |
| 7 | Third lens | Aspherical surface | 3.186 | 0.300 | Plastic | 1.67 | 19.20 | 38.51 | |
| 8 | | Aspherical surface | 3.489 | 1.194 | | | | | |
| 9 | Fourth lens | Aspherical surface | -3.618 | 0.300 | Plastic | 1.57 | 37.30 | -14.12 | |
| 10 | | Aspherical surface | -6.758 | 0.480 | | | | | |
| 11 | Fifth lens | Aspherical surface | 44.550 | 0.624 | Plastic | 1.54 | 56.1 | -9.47 | |
| 12 | | Aspherical surface | -3.935 | 0.550 | | | | | |

(continued)

| Embodiment 5 | | | | | | | | | |
|---|---|---|---|---|---|---|---|---|---|
| f=17 mm FNO=2.6 FOV=13.7° TTL=7.2 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity | | | | | |
| 13 | Filter | Spherical surface | Infinity | 0.210 | Glass | 1.52 | 64.2 | | |
| 14 | | Spherical surface | Infinity | 0.240 | | | | | |
| Image plane | Image plane | Spherical surface | Infinity | 0.0000 | | | | | |
| Note: The reference wavelength is 587 nm. | | | | | | | | | |

In addition, in this embodiment, a central thickness e2 of the first lens 311 is 1.931 mm, a maximum outside diameter D of the first lens 311 is 8.95 mm, and d/D=0.22. In this way, this helps implement molding and processing of the first lens 311 and increase a molding or processing yield of the first lens 311.

In Embodiment 5, an object-side surface and an image-side surface of any one of the first lens 311, the second lens 312a, the third lens 312b, the fourth lens 312c, and the fifth lens 312d are both aspherical surfaces. Aspherical surface types are defined for the first lens 311 to the fourth lens 312c by using a Qbfs polynomial. A formula is as follows:

$$z(r) = \frac{c_{bfs}r^2}{1 + \sqrt{1 - c^2_{bfs}r^2}} + \frac{u^2(1 - u^2)}{\sqrt{1 - c^2_{bfs}r_n^2 u^2}} \sum_{m=0}^{M} a_m Q_m^{bfs}(u_2) .$$

An aspherical surface type is defined for the fifth lens 312d by using a Qcon polynomial. A formula is as follows:

$$z(r) = \frac{cr^2}{1 + \sqrt{1 + \varepsilon c^2 r^2}} + u^\varphi \sum_{m=0}^{M} a_m Q_m^{con}(u_2) .$$

Table 5-3 shows surface type coefficients of each aspherical lens surface in Embodiment 5. Herein, K is a quadric constant, and $A_1$, $A_2$, $A_3$, $A_4$, $A_5$, $A_6$, $A_7$, and $A_8$ are respectively a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 5-3: Surface type coefficients of each aspherical lens surface in Embodiment 5**

| Surface number | K | Standard radius | A0 | A1 | A2 | A3 | A4 | A5 | A6 | A7 | A8 |
|---|---|---|---|---|---|---|---|---|---|---|---|
| 1 | 1.304 E+01 | 5.525 E+00 | - 7.602 E-01 | - 3.593 E-02 | - 1.758 E-02 | 5.315 E-03 | 3.203 E-03 | 1.305 E-04 | | | |
| 2 | - 6.108 E-01 | 7.301 E+00 | 9.092 E-02 | - 8.774 E-03 | 5.992 E-03 | 1.317 E-02 | - 5.072 E-03 | - 2.676 E-03 | | | |

(continued)

| Surface number | K | Standard radius | A0 | A1 | A2 | A3 | A4 | A5 | A6 | A7 | A8 |
|---|---|---|---|---|---|---|---|---|---|---|---|
| 3 | -3.221 E+00 | 1.659 E+00 | -2.410 E-02 | 3.887 E-03 | -4.576 E-04 | 2.419 E-05 | 3.221 E-06 | -5.333 E-07 | | | |
| 4 | -6.108 E-01 | 7.301 E+00 | 9.092 E-02 | -8.774 E-03 | 5.992 E-03 | 1.317 E-02 | -5.072 E-03 | -2.676 E-03 | | | |
| 5 | 0.000 E+00 | 1.167 E+00 | 3.054 E-01 | -3.943 E-02 | 8.331 E-03 | -1.308 E-03 | 7.398 E-04 | 9.312 E-05 | 1.281 E-04 | 2.907 E-05 | 1.08 E-05 |
| 6 | 0.000 E+00 | 2.221 E+00 | 1.809 E+00 | -5.121 E-01 | 1.079 E-01 | -2.777 E-02 | -1.224 E-02 | -3.027 E-02 | 3.500 E-03 | 6.006 E-03 | 3.60 E-03 |
| 7 | 0.000 E+00 | 1.266 E+00 | -6.189 E-01 | -4.439 E-02 | -3.301 E-02 | -1.855 E-02 | 5.027 E-04 | 6.906 E-03 | 5.400 E-03 | 2.224 E-03 | 4.72 E-04 |
| 8 | 0.000 E+00 | 1.376 E+00 | -6.549 E-01 | 7.054 E-02 | -2.003 E-03 | -9.035 E-03 | -3.142 E-03 | -6.311 E-05 | 5.016 E-04 | 1.875 E-04 | -2.01 E-05 |
| 9 | 0.000 E+00 | 1.978 E+00 | -4.769 E-01 | 4.930 E-02 | 4.132 E-02 | 1.736 E-02 | -5.108 E-02 | -2.573 E-02 | -1.573 E-03 | -2.304 E-03 | -2.16 E-03 |
| 10 | 0.000 E+00 | 2.075 E+00 | 1.655 E-01 | -3.142 E-01 | -2.028 E-01 | -2.670 E-02 | -4.411 E-02 | -1.679 E-02 | -1.216 E-02 | -1.040 E-02 | -4.45 E-03 |
| 11 | 0.000 E+00 | 2.503 E+00 | -6.720 E-01 | -2.527 E-01 | 1.371 E-02 | -3.057 E-02 | 6.865 E-02 | 9.564 E-03 | 1.941 E-02 | -9.356 E-03 | 1.70 E-02 |
| 12 | 0.000 E+00 | 2.848 E+00 | -1.044 E+00 | 4.654 E-01 | 1.077 E-02 | 1.229 E-01 | -2.107 E-01 | 1.035 E-01 | 6.960 E-02 | -4.025 E-02 | 2.38 E-02 |

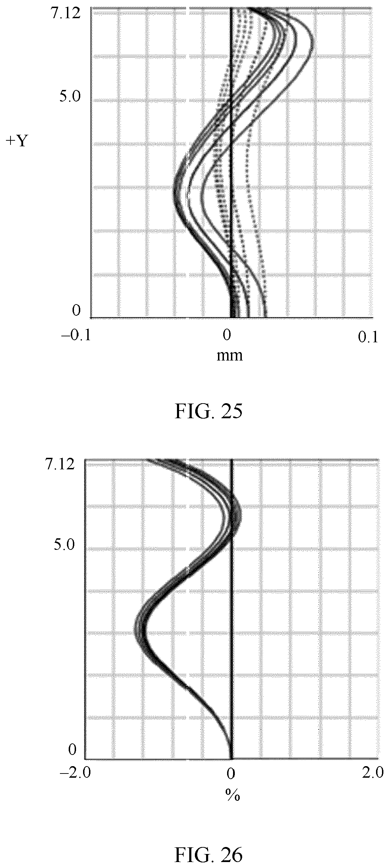

With reference to FIG. 25 and FIG. 26, FIG. 25 is a field curvature diagram of the lens 31 shown in FIG. 24, and FIG. 26 is a distortion diagram of the lens 31 shown in FIG. 24. It may be learned from FIG. 25 that a field curvature of the lens 31 is within 0.1 mm, and presents a relative contraction state. It may be learned from FIG. 26 that a distortion of the lens 31 is less than 1.8%. In this way, it is ensured that an image captured by the lens 31 is bent and flat, and there is no visible distortion.

**Embodiment 6**

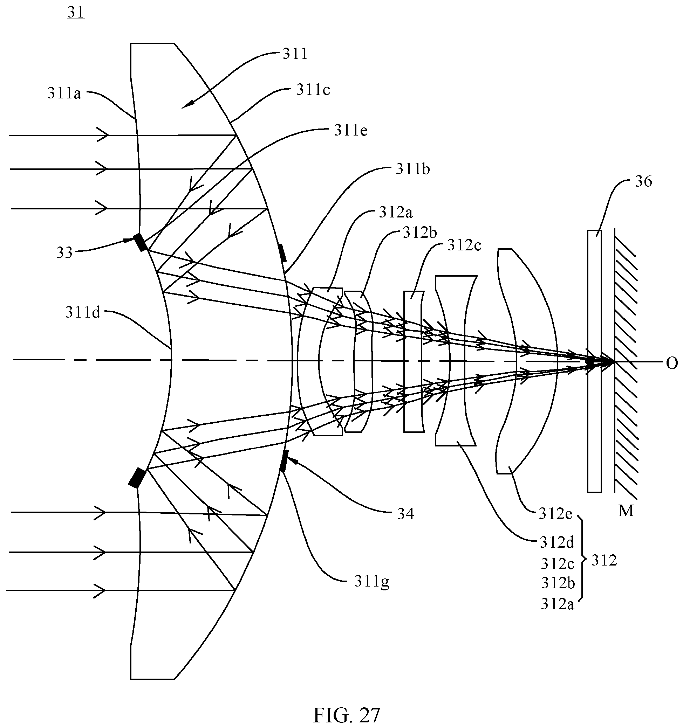

With reference to FIG. 27, FIG. 27 is a diagram of a structure of a lens 31 according to some other embodiments of this application. Solid lines with arrows in FIG. 27 represent an optical path of incident light. The lens 31 in this embodiment includes a first lens 311, a second lens group 312, and a filter 36 that are sequentially disposed along an optical axis O from an object side to an image side. The second lens group 312 includes a second lens 312a, a third lens 312b, a fourth lens 312c, a fifth lens 312d, and a sixth lens 312e that are sequentially disposed along the optical axis O from the object side to the image side.

The first lens 311 includes a first refracting surface 311a, a second refracting surface 311b, a first reflecting surface 311c, and a second reflecting surface 311d. The first refracting surface 311a and the second reflecting surface 311d are located at an object-side surface of the first lens 311. The first refracting surface 311a surrounds an outer circumference of the second reflecting surface 311d. The first refracting surface 311a and the second reflecting surface 311d are smoothly transitionally connected through a first transition surface 311e. A light-shielding layer 33 is disposed at each of the first transition surface 311e and the second reflecting surface 311d. The second refracting surface 311b and the first reflecting surface 311c are located at an image-side surface of the first lens 311. The first reflecting surface 311c surrounds an outer circumference of the second refracting surface 311b. After entering the first lens 311 through the first refracting surface 311a, incident light is sequentially reflected by the first reflecting surface 311c and the second reflecting surface 311d, and then is emitted from the first lens 311 after being refracted by the second refracting surface 311b.

The first refracting surface 311a is concave. The second reflecting surface 311d is concave. An intersection point between the optical axis O and a surface at which the first refracting surface 311a is located is located on a side that is of the second reflecting surface 311d and that is opposite to the second refracting surface 311b. The first reflecting surface 311c is convex. The second refracting surface 311b is convex. The first reflecting surface 311c and the second refracting surface 311b are coplanar. The first reflecting surface 311c is connected to the second refracting surface 311b through a second transition surface 311g. A light-shielding structure 34 is disposed on the second transition surface 311g.

A focal power of the first lens 311 is positive. A focal power of the second lens 312a is negative. A focal power of the third lens 312b is positive. A focal power of the fourth lens 312c is negative. A focal power of the fifth lens 312d is negative. A focal power of the sixth lens 312e is negative.

Table 6-1 shows optical parameters of the lens 31 in Embodiment 6.

**Table 6-1: Optical parameters of the lens 31 in Embodiment 6**

|  | Optical parameters |
|---|---|
| Effective focal length (f) | 20 mm |
| Field of view (FVO) | 11.6° |
| Aperture coefficient (FNO) | 2.8 |
| Total track length (TTL) | 7.5 mm |
| Focal length of the first lens (LEF1) | 7.87 mm |
| Focal length of the second lens group (LEF2) | -1.7 mm |
| Radius of a maximum image circle (Imgh) | 2.04 mm |
| Maximum outside diameter of the first lens (D) | 9.17 mm |

Specifically, in this embodiment, the effective focal length f of the lens 31 is 20 mm, the field of view FVO is 11.6°, and the aperture coefficient FNO is 2.8. In other words, f/EPD=2.8. The total track length, that is, a distance TTL from the object-side surface of the first lens 311 to an image plane M on the optical axis O is 7.5 mm. The focal length of the first lens 311: LEF1 is 7.87 mm. The focal length of the second lens group 312: LEF2 is -1.7 mm. The radius of the maximum image circle: Imgh is 2.04 mm. Herein, LEF1/LEF2=-4.63, TTL/f=0.38, Imgh/TTL=0.1, LEF1/f=0.39, LEF2/f=-0.09, and Imgh/D=0.22.

Table 6-2 shows specific parameters of each element of the lens 31 in Embodiment 6. A physical meaning represented by each parameter is the same as that in Table 1-2. Details are not described herein again.

**Table 6-2: Specific parameters of each element of the lens 31 in Embodiment 6**

| Embodiment 6 | | | | | | | | | |
|---|---|---|---|---|---|---|---|---|---|
| f=20 mm FNO=2.8 FOV=11.6° TTL=7.5 mm | | | | | | | | | |
| Surface number | Surface name | Surface type | Curvature radius | Thickness | Material | Refractive index | Abbe number | Focal length | Combined focal length |
| Object plane | Object plane | Spherical surface | Infinity | Infinity |  |  |  |  |  |

(continued)

| Embodiment 6 | | | | | | | | | |
|---|---|---|---|---|---|---|---|---|---|
| f=20 mm FNO=2.8 FOV=11.6° TTL=7.5 mm | | | | | | | | | |
| Surface number | Surface name | Surface type | Curvature radius | Thickness | Material | Refractive index | Abbe number | Focal length | Combined focal length |
| 1 | Object-side edge region of the first lens | Aspherical surface | 49.543 | 2.420 | Glass | 1.52 | 64.1 | 7.87 | 7.87 |
| 2 | Image-side edge region of the first lens (first reflecting surface) | Aspherical surface | -7.107 | -1.933 | Mirror | | | | |
| 3 | Object-side central region of the first lens (second reflecting surface) | Aspherical surface | -4.060 | 1.933 | Mirror | | | | |
| 4 | Image-side central region of the first lens | Aspherical surface | -7.107 | 0.000 | | | | | |
| Diaphragm | Diaphragm | Spherical surface | Infinity | 0.103 | | | | | |
| 5 | Second lens | Aspherical surface | -15.957 | 0.308 | Plastic | 1.54 | 56.1 | -5.23 | -1.70 |
| 6 | | Aspherical surface | 3.502 | 0.531 | | | | | |
| 7 | Third lens | Aspherical surface | 3.584 | 0.281 | Plastic | 1.67 | 19.20 | 723.52 | |
| 8 | | Aspherical surface | 3.496 | 0.538 | | | | | |
| 9 | Fourth lens | Aspherical surface | -39.828 | 0.250 | Plastic | 1.67 | 19.20 | -28.81 | |
| 10 | | Aspherical surface | 38.611 | 0.439 | | | | | |
| 11 | Fifth lens | Aspherical surface | -2.994 | 0.250 | Plastic | 1.54 | 56.1 | -9.26 | |
| 12 | | Aspherical surface | -7.550 | 0.787 | | | | | |
| 13 | Sixth lens | Aspherical surface | -57.621 | 0.644 | Plastic | 1.54 | 56.1 | -8.00 | |
| 14 | | Aspherical surface | -3.031 | 0.500 | | | | | |

(continued)

| Embodiment 6 | | | | | | | | | |
|---|---|---|---|---|---|---|---|---|---|
| f=20 mm FNO=2.8 FOV=11.6° TTL=7.5 mm | | | | | | | | | |
| Surface number | Surface name | Surface type | Curvature radius | Thickness | Material | Refractive index | Abbe number | Focal length | Combined focal length |
| 15 | Filter | Spherical surface | Infinity | 0.210 | Glass | 1.52 | 64.2 | | |
| 16 | | Spherical surface | Infinity | 0.240 | | | | | |
| Image plane | Image plane | Spherical surface | Infinity | 0.0000 | | | | | |
| Note: The reference wavelength is 587 nm. | | | | | | | | | |

In this embodiment, a central thickness e2 of the first lens 311 is 1.933 mm, a maximum outside diameter D of the first lens 311 is 9.17 mm, and d/D=0.21. In this way, this helps implement molding and processing of the first lens 311 and increase a molding or processing yield of the first lens 311.

In Embodiment 6, an object-side surface and an image-side surface of any one of the first lens 311, the second lens 312a, the third lens 312b, the fourth lens 312c, the fifth lens 312d, and the sixth lens 312e are both aspherical surfaces. In this embodiment, aspherical surface types of the first lens 311 to the fifth lens 312d are defined by using a Qbfs polynomial, and an aspherical surface type of the sixth lens 312e may be defined by using a Qcon polynomial.

Table 6-3 shows surface type coefficients of each aspherical lens surface in Embodiment 6. Herein, K is a quadric constant, and $A_1$, $A_2$, $A_3$, $A_4$, $A_5$, $A_6$, $A_7$, and $A_8$ are respectively a first-order aspherical coefficient, a second-order aspherical coefficient, a third-order aspherical coefficient, a fourth-order aspherical coefficient, a fifth-order aspherical coefficient, a sixth-order aspherical coefficient, a seventh-order aspherical coefficient, and an eighth-order aspherical coefficient.

**Table 6-3: Surface type coefficients of each aspherical lens surface in Embodiment 6**

| Surface number | K | Standard radius | A0 | A1 | A2 | A3 | A4 | A5 | A6 | A7 | A8 |
|---|---|---|---|---|---|---|---|---|---|---|---|
| 1 | 4.023 E+00 | 5.485 E+00 | - 7.691 E-01 | - 3.016 E-02 | - 4.015 E-02 | - 6.934 E-03 | - 1.373 E-03 | - 6.797 E-04 | | | |
| 2 | - 5.840 E-01 | 7.653 E+00 | 5.941 E-02 | 2.005 E-03 | - 8.319 E-04 | 1.820 E-02 | 4.501 E-03 | - 2.010 E-03 | | | |
| 3 | - 2.939 E+00 | 1.576 E+00 | - 2.626 E-02 | 3.710 E-03 | - 4.143 E-04 | 2.834 E-05 | 1.873 E-08 | - 9.736 E-08 | | | |
| 4 | - 5.840 E-01 | 7.653 E+00 | 5.941 E-02 | 2.005 E-03 | - 8.319 E-04 | 1.820 E-02 | 4.501 E-03 | - 2.010 E-03 | | | |
| 5 | 0.000 E+00 | 1.159 E+00 | 3.108 E-01 | - 3.725 E-02 | 8.317 E-03 | - 1.814 E-03 | 4.474 E-04 | - 8.520 E-05 | 4.992 E-05 | 3.027 E-06 | 1.31E -05 |
| 6 | 0.000 E+00 | 2.222 E+00 | 1.830 E+00 | - 5.058 E-01 | 9.337 E-02 | - 1.175 E-02 | - 2.068 E-02 | - 3.541 E-02 | 9.820 E-03 | 7.262 E-03 | 3.34E -03 |
| 7 | 0.000 E+00 | 1.262 E+00 | - 6.467 E-01 | - 3.539 E-02 | - 3.011 E-02 | - 1.898 E-02 | - 8.460 E-04 | 4.455 E-03 | 3.928 E-03 | 1.820 E-03 | 3.95E -04 |

(continued)

| Surface number | K | Standard radius | A0 | A1 | A2 | A3 | A4 | A5 | A6 | A7 | A8 |
|---|---|---|---|---|---|---|---|---|---|---|---|
| 8 | 0.000 E+00 | 1.369 E+00 | -6.996 E-01 | 6.440 E-02 | 4.206 E-03 | -4.543 E-03 | -2.511 E-03 | -3.091 E-03 | -2.064 E-03 | -1.049 E-03 | -3.87E-04 |
| 9 | 0.000 E+00 | 1.995 E+17 | 3.416 E+65 | 1.911 E+65 | 1.187 E+64 | -2.345 E+64 | 5.091 E+63 | 1.317 E+64 | 1.907 E+63 | -9.383 E+62 | -2.59E+62 |
| 10 | 0.000 E+00 | 8.994 E+00 | 5.237 E+02 | -8.953 E+01 | 2.910 E+01 | -5.520 E+00 | 1.878 E+00 | 5.109 E-01 | -1.957 E+00 | 1.628 E+00 | -2.16E+00 |
| 11 | 0.000 E+00 | 1.988 E+00 | -2.348 E-01 | -7.074 E-02 | 8.670 E-02 | 1.074 E-02 | -5.145 E-02 | -2.047 E-02 | -6.734 E-03 | -3.106 E-03 | -1.58E-03 |
| 12 | 0.000 E+00 | 2.005 E+00 | 3.767 E-01 | -5.461 E-01 | -1.162 E-01 | -5.383 E-02 | -3.951 E-02 | -1.459 E-02 | -1.663 E-02 | -7.084 E-03 | -2.03E-03 |
| 13 | 0.000 E+00 | 2.483 E+00 | -7.275 E-01 | -2.658 E-01 | 6.651 E-03 | -3.701 E-02 | 6.166 E-02 | 4.539 E-03 | 1.651 E-02 | -1.049 E-02 | 1.65E-02 |
| 14 | 0.000 E+00 | 2.835 E+00 | -1.190 E+00 | 4.209 E-01 | -6.118 E-03 | 1.260 E-01 | -1.960 E-01 | 1.164 E-01 | 7.135 E-02 | -4.555 E-02 | 2.84E-02 |

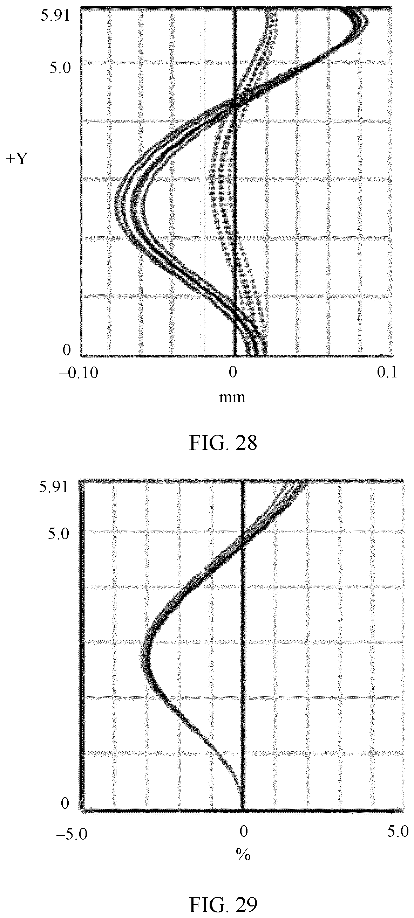

With reference to FIG. 28 and FIG. 29, FIG. 28 is a field curvature diagram of the lens 31 shown in FIG. 27, and FIG. 29 is a distortion diagram of the lens 31 shown in FIG. 27. It may be learned from FIG. 28 that a field curvature of the lens 31 is within 0.2 mm, and presents a relative contraction state. It may be learned from FIG. 29 that a distortion of the lens 31 is less than 4%. In this way, it is ensured that an image captured by the lens 31 is bent and flat, and there is no visible distortion.

In description of this specification, specific features, structures, materials, or characteristics may be combined in an appropriate manner in any one or more of embodiments or examples.

In conclusion, it should be noted that the foregoing embodiments are merely intended for describing the technical solutions of this application but not for limiting this application. Although this application is described in detail with reference to the foregoing embodiments, persons of ordinary skills in the art should understand that they may still make modifications to the technical solutions described in the foregoing embodiments, without departing from the scope of the technical solutions of embodiments of this application as defined by the scope of the appended claims.

**Claims**

1. A lens (31), comprising:

a first lens (311), wherein the first lens (311) comprises a first refracting surface (311a), a second refracting surface (311b), a first reflecting surface (311c), and a second reflecting surface (311d), the first refracting surface (311a) and the second reflecting surface (311d) are located at an object-side surface of the first lens (311), the first refracting surface (311a) is located on a side that is of the second reflecting surface (311d) and that is away from an optical axis (O), the second refracting surface (311b) and the first reflecting surface (311c) are located at an image-side surface of the first lens (31), the first reflecting surface (311c) is located on a side that is of the second refracting surface (311b) and that is away from the optical axis (O), and incident light enters the first lens (31) through the first refracting surface (311a), then is sequentially reflected by the first reflecting surface (311c) and the second reflecting surface (311d), and is emitted from the first lens (311) through the second refracting surface (311b); and
the first lens (311) further comprises an arc-shaped first transition surface (311e) connected between the first refracting surface (311a) and the second reflecting surface (311d), the first refracting surface (311a) and the second reflecting surface (311d) are smoothly transitionally connected through the first transition surface (311e), and a light-shielding layer (33) is disposed at the first transition surface (311e);

wherein the second reflecting surface (311d) is located in the middle region of the object-side surface, the first refracting surface (311a) surrounds the outer circumference of the second reflecting surface (311b), an orthographic projection of the first transition surface (311e) on a reference plane is a first projection, the first projection is annular, an orthographic projection of the second reflecting surface (311d) on the reference plane is a second projection, wherein the reference plane is perpendicular to the optical axis (O) of the lens (31);

the lens (31) **characterised in that**:

an outside diameter (D) of the first lens (311) is greater than or equal to 8 mm and less than or equal to 15 mm; and

a ratio of an annular band width of the first projection to a radius of the second projection is less than or equal to 0.1.

2. The lens (31) according to claim 1, wherein the second reflecting surface (311d) is located in a middle region of the object-side surface, and the first refracting surface (311a) surrounds an outer circumference of the second reflecting surface (311d).

3. The lens (31) according to claim 2, wherein an intersection point between the optical axis (O) and a surface at which the first refracting surface (311a) is located is located on a side that is of the second reflecting surface (311d) and that is opposite to the second refracting surface (311b).

4. The lens (31) according to any one of claims 1 to 3, wherein a reflective film is disposed at the second reflecting surface (311d), and the light-shielding layer (33) is disposed on a side that is of the reflective film and that is opposite to the second refracting surface (311b).

5. The lens (31) according to claim 4, wherein the second reflecting surface (311d) is located in the middle region of the object-side surface, the first refracting surface (311a) surrounds the outer circumference of the second reflecting surface (311d), the orthographic projection of the first transition surface (311e) on the reference plane is the first projection, an orthographic projection of the first refracting surface (311a) on the reference plane is a third projection, a ratio of an outside diameter of the first projection to an outside diameter of the third projection is greater than or equal to 0.3 and less than or equal to 0.5, and the reference plane is perpendicular to the optical axis (O) of the lens (31).

6. The lens (31) according to any one of claims 1 to 5, wherein an edge thickness of the first lens (311) is greater than or equal to 0.5 mm and less than or equal to 1.2 mm.

7. The lens (31) according to any one of claims 1 to 6, wherein the first reflecting surface (311c) and the second refracting surface (311b) have a same aspherical parameter.

8. The lens (31) according to claim 7, wherein a central thickness of the first lens (311) is greater than or equal to 1.5 mm and less than or equal to 2.5 mm.

9. The lens (31) according to any one of claims 1 to 6, wherein a recessed part (311f) recessed toward the object-side surface of the first lens (311) is disposed at the image-side surface of the first lens (311), and the second refracting surface (311b) is formed on a bottom wall of the recessed part (311f).

10. The lens (31) according to claim 9, wherein a central thickness of the first lens (311) is greater than or equal to 1 mm and less than or equal to 2 mm.

11. The lens (31) according to any one of claims 1 to 10, wherein a ratio of the central thickness of the first lens (311) to the outside diameter of the first lens (311) is greater than 0.1.

12. The lens (31) according to any one of claims 1 to 11, further comprising a second lens group (312), wherein the second lens group (312) is located on a side that faces the image-side surface of the first lens (311), and a surface that is of the second lens group (312) and that is opposite to the first lens (311) is located on a side that is of the first reflecting surface (311c) and that is opposite to the second reflecting surface (311d).

**13.** The lens (31) according to claim 12, wherein a focal length of the first lens (311) is LEF1, a focal length of the second lens group (312) is LEF2, and an effective focal length of the lens (31) is f; and

a ratio of LEF1 to LEF2 is greater than -5.5 and less than -2; and/or
a ratio of LEF1 to f is greater than 0.35 and less than 0.6; and/or
a ratio of LEF2 to f is greater than -0.25 and less than 0.

**14.** The lens (31) according to claim 12 or 13, wherein the lens (31) has an image plane, a distance from the object-side surface of the first lens (311) to the image plane on the optical axis (O) is TTL, the effective focal length of the lens is f, and a ratio of TTL to f is greater than or equal to 0.3 and less than or equal to 0.5.


**Patentansprüche**

**1.** Linse (31), umfassend:

eine erste Linse (311), wobei die erste Linse (311) eine erste lichtbrechende Fläche (311a), eine zweite lichtbrechende Fläche (311b), eine erste reflektierende Fläche (311c) und eine zweite reflektierende Fläche (311d) umfasst, wobei die erste lichtbrechende Fläche (311a) und die zweite reflektierende Fläche (311d) an einer objektseitigen Fläche der ersten Linse (311) angeordnet sind, wobei die erste lichtbrechende Fläche (311a) auf einer Seite angeordnet ist, die von der zweiten reflektierenden Fläche (311d) liegt und von einer optischen Achse (O) entfernt ist, wobei die zweite lichtbrechende Fläche (311b) und die erste reflektierende Fläche (311c) an einer bildseitigen Fläche der ersten Linse (31) angeordnet sind, wobei die erste reflektierende Fläche (311c) auf einer Seite angeordnet ist, die von der zweiten lichtbrechenden Fläche (311b) liegt und von der optischen Achse (O) entfernt ist, und wobei einfallendes Licht durch die erste lichtbrechende Fläche (311a) in die erste Linse (31) eintritt, dann nacheinander von der ersten reflektierenden Fläche (311c) und der zweiten reflektierenden Fläche (311d) reflektiert wird und durch die zweite lichtbrechende Fläche (311b) aus der ersten Linse (311) austritt; und
die erste Linse (311) des Weiteren eine bogenförmige erste Übergangsfläche (311e) umfasst, die zwischen der ersten lichtbrechenden Fläche (311a) und der zweiten reflektierenden Fläche (311d) verbunden ist, wobei die erste lichtbrechende Fläche (311a) und die zweite reflektierende Fläche (311d) über die erste Übergangsfläche (311e) glatt übergangsmäßig verbunden sind und eine Lichtschutzschicht (33) an der ersten Übergangsfläche (311e) angeordnet ist;
wobei die zweite reflektierende Fläche (311d) in der mittleren Region der objektseitigen Fläche angeordnet ist, die erste lichtbrechende Fläche (311a) den Außenumfang der zweiten reflektierenden Fläche (311b) umgibt, eine orthogonale Projektion der ersten Übergangsfläche (311e) auf eine Referenzebene eine erste Projektion ist, die erste Projektion ringförmig ist, eine orthogonale Projektion der zweiten reflektierenden Fläche (311d) auf die Referenzebene eine zweite Projektion ist, wobei die Referenzebene senkrecht zur optischen Achse (O) der Linse (31) steht;
die Linse (31) **dadurch gekennzeichnet, dass**:

ein Außendurchmesser (D) der ersten Linse (311) größer oder gleich 8 mm und kleiner oder gleich 15 mm ist; und
ein Verhältnis einer ringförmigen Bandbreite der ersten Projektion zu einem Radius der zweiten Projektion kleiner oder gleich 0,1 ist.

**2.** Linse (31) nach Anspruch 1, wobei die zweite reflektierende Fläche (311d) in einer mittleren Region der objektseitigen Fläche angeordnet ist und die erste lichtbrechende Fläche (311a) einen Außenumfang der zweiten reflektierenden Fläche (311d) umgibt.

**3.** Die Linse (31) nach Anspruch 2, wobei ein Schnittpunkt zwischen der optischen Achse (O) und einer Fläche, an der sich die erste brechende Fläche (311a) befindet, auf einer Seite liegt, die von der zweiten reflektierenden Fläche (311d) und der zweiten brechenden Fläche (311b) abgewandt ist.

**4.** Die Linse (31) nach einem der Ansprüche 1 bis 3, wobei an der zweiten reflektierenden Fläche (311d) ein Reflexionsfilm angeordnet ist und die Lichtabschirmungsschicht (33) auf einer Seite angeordnet ist, die von dem Reflexionsfilm und der zweiten brechenden Fläche (311b) abgewandt ist.

**5.** Die Linse (31) nach Anspruch 4, wobei die zweite reflektierende Fläche (311d) im mittleren Bereich der objektseitigen Oberfläche liegt, die erste brechende Fläche (311a) den Außenumfang der zweiten reflektierenden Fläche (311d) umgibt, die orthografische Projektion der ersten Übergangsfläche (311e) auf die Referenzebene die erste Projektion ist, eine orthografische Projektion der ersten brechenden Fläche (311a) auf die Referenzebene eine dritte Projektion ist, ein Verhältnis eines Außendurchmessers der ersten Projektion zu einem Außendurchmesser der dritten Projektion größer oder gleich 0,3 und kleiner oder gleich 0,5 ist und die Referenzebene senkrecht zur optischen Achse (O) der Linse (31) steht.

**6.** Die Linse (31) nach einem der Ansprüche 1 bis 5, wobei eine Randdicke der ersten Linse (311) größer oder gleich 0,5 mm und kleiner oder gleich 1,2 mm ist.

**7.** Die Linse (31) nach einem der Ansprüche 1 bis 6, wobei die erste reflektierende Fläche (311c) und die zweite brechende Fläche (311b) denselben asphärischen Parameter aufweisen.

**8.** Die Linse (31) nach Anspruch 7, wobei eine Mittendicke der ersten Linse (311) größer oder gleich 1,5 mm und kleiner oder gleich 2,5 mm ist.

**9.** Die Linse (31) nach einem der Ansprüche 1 bis 6, wobei ein vertiefter Teil (311f), der in Richtung der objektseitigen Oberfläche der ersten Linse (311) vertieft ist, an der bildseitigen Oberfläche der ersten Linse (311) angeordnet ist und die zweite brechende Fläche (311b) an einer Bodenwand des vertieften Teils (311f) ausgebildet ist.

**10.** Die Linse (31) nach Anspruch 9, wobei eine Mittendicke der ersten Linse (311) größer oder gleich 1 mm und kleiner oder gleich 2 mm ist.

**11.** Die Linse (31) nach einem der Ansprüche 1 bis 10, wobei ein Verhältnis der Mittendicke der ersten Linse (311) zum Außendurchmesser der ersten Linse (311) größer als 0,1 ist.

**12.** Die Linse (31) nach einem der Ansprüche 1 bis 11, ferner umfassend eine zweite Linsengruppe (312), wobei die zweite Linsengruppe (312) auf einer Seite angeordnet ist, die der bildseitigen Oberfläche der ersten Linse (311) zugewandt ist, und eine Oberfläche der zweiten Linsengruppe (312), die der ersten Linse (311) gegenüberliegt, auf einer Seite angeordnet ist, die der ersten reflektierenden Oberfläche (311c) zugeordnet ist und die der zweiten reflektierenden Oberfläche (311d) gegenüberliegt.

**13.** Die Linse (31) nach Anspruch 12, wobei eine Brennweite der ersten Linse (311) LEF1 ist, eine Brennweite der zweiten Linsengruppe (312) LEF2 ist und eine effektive Brennweite der Linse (31) f ist; und

ein Verhältnis von LEF1 zu LEF2 größer als -5,5 und kleiner als -2 ist; und/oder
ein Verhältnis von LEF1 zu f größer als 0,35 und kleiner als 0,6 ist; und/oder
ein Verhältnis von LEF2 zu f größer als -0,25 und kleiner als 0 ist.

**14.** Die Linse (31) nach Anspruch 12 oder 13, wobei die Linse (31) eine Bildebene aufweist, ein Abstand von der objektseitigen Oberfläche der ersten Linse (311) zur Bildebene auf der optischen Achse (O) TTL ist, die effektive Brennweite der Linse f ist und ein Verhältnis von TTL zu f größer als oder gleich 0,3 und kleiner als oder gleich 0,5 ist.

**Revendications**

**1.** Lentille (31), comprenant :

une première lentille (311), dans laquelle la première lentille (311) comprend une première surface de réfraction (311a), une seconde surface de réfraction (311b), une première surface de réflexion (311c) et une seconde surface de réflexion (311d), la première surface de réfraction (311a) et la seconde surface de réflexion (311d) sont situées au niveau d'une surface côté objet de la première lentille (311), la première surface de réfraction (311a) est située sur un côté qui est celui de la seconde surface de réflexion (311d) et qui est éloigné d'un axe optique (O), la seconde surface de réfraction (311b) et la première surface de réflexion (311c) sont situées au niveau d'une surface côté image de la première lentille (31), la première surface de réflexion (311c) est située sur un côté qui est celui de la seconde surface de réfraction (311b) et qui est éloigné de l'axe optique (O), et la lumière incidente entre dans la première lentille (31) par la première surface de réfraction (311a), puis est séquentiellement réfléchie par la première surface de réflexion (311c) et la seconde surface de réflexion (311d), et est émise depuis la première lentille (311) par la seconde surface de réfraction (311b) ; et

la première lentille (311) comprend en outre une première surface de transition (311e) en forme d'arc connectée entre la première surface de réfraction (311a) et la seconde surface de réflexion (311d), la première surface de réfraction (311a) et la seconde surface de réflexion (311d) sont connectées de manière transitionnelle et lisse par la première surface de transition (311e), et une couche de masquage de lumière (33) est disposée au niveau de la première surface de transition (311e) ;

dans laquelle la seconde surface de réflexion (311d) est située dans la région centrale de la surface côté objet, la première surface de réfraction (311a) entoure la circonférence extérieure de la seconde surface de réflexion (311b), une projection orthogonale de la première surface de transition (311e) sur un plan de référence est une première projection, la première projection est annulaire, une projection orthogonale de la seconde surface de réflexion (311d) sur le plan de référence est une seconde projection, dans laquelle le plan de référence est perpendiculaire à l'axe optique (O) de la lentille (31) ;

la lentille (31) **caractérisée en ce que** :

un diamètre extérieur (D) de la première lentille (311) est supérieur ou égal à 8 mm et inférieur ou égal à 15 mm ; et

un rapport entre une largeur de bande annulaire de la première projection et un rayon de la seconde projection est inférieur ou égal à 0,1.

2. Lentille (31) selon la revendication 1, dans laquelle la seconde surface de réflexion (311d) est située dans une région centrale de la surface côté objet, et la première surface de réfraction (311a) entoure une circonférence extérieure de la seconde surface de réflexion (311d).

3. Lentille (31) selon la revendication 2, dans laquelle un point d'intersection entre l'axe optique (O) et une surface au niveau de laquelle la première surface de réfraction (311a) est située, est situé sur un côté qui est celui de la seconde surface de réflexion (311d) et qui est opposé à la seconde surface de réfraction (311b).

4. Lentille (31) selon l'une quelconque des revendications 1 à 3, dans laquelle un film réfléchissant est disposé au niveau de la seconde surface de réflexion (311d), et la couche de protection contre la lumière (33) est disposée sur un côté qui est celui du film réfléchissant et qui est opposé à la seconde surface de réfraction (311b).

5. Lentille (31) selon la revendication 4, dans laquelle la seconde surface de réflexion (311d) est située dans la région médiane de la surface côté objet, la première surface de réfraction (311a) entoure la circonférence extérieure de la seconde surface de réflexion (311d), la projection orthogonale de la première surface de transition (311e) sur le plan de référence est la première projection, une projection orthogonale de la première surface de réfraction (311a) sur le plan de référence est une troisième projection, un rapport entre un diamètre extérieur de la première projection et un diamètre extérieur de la troisième projection est supérieur ou égal à 0,3 et inférieur ou égal à 0,5, et le plan de référence est perpendiculaire à l'axe optique (O) de la lentille (31).

6. Lentille (31) selon l'une quelconque des revendications 1 à 5, dans laquelle une épaisseur de bord de la première lentille (311) est supérieure ou égale à 0,5 mm et inférieure ou égale à 1,2 mm.

7. Lentille (31) selon l'une quelconque des revendications 1 à 6, dans laquelle la première surface de réflexion (311c) et la seconde surface de réfraction (311b) ont un même paramètre asphérique.

8. Lentille (31) selon la revendication 7, dans laquelle une épaisseur centrale de la première lentille (311) est supérieure ou égale à 1,5 mm et inférieure ou égale à 2,5 mm.

9. Lentille (31) selon l'une quelconque des revendications 1 à 6, dans laquelle une partie évidée (311f) évidée vers la surface côté objet de la première lentille (311) est disposée au niveau de la surface côté image de la première lentille (311), et la seconde surface de réfraction (311 b) est formée sur une paroi inférieure de la partie évidée (311f).

10. Lentille (31) selon la revendication 9, dans laquelle une épaisseur centrale de la première lentille (311) est supérieure ou égale à 1 mm et inférieure ou égale à 2 mm.

11. Lentille (31) selon l'une quelconque des revendications 1 à 10, dans laquelle un rapport de l'épaisseur centrale de la première lentille (311) au diamètre extérieur de la première lentille (311) est supérieur à 0,1.

**12.** Lentille (31) selon l'une quelconque des revendications 1 à 11, comprenant en outre un second groupe de lentilles (312), dans laquelle le second groupe de lentilles (312) est situé sur un côté qui fait face à la surface côté image de la première lentille (311), et une surface qui est celle du second groupe de lentilles (312) et qui est opposée à la première lentille (311) est située sur un côté qui est celui de la première surface réfléchissante (311c) et qui est opposé à la seconde surface réfléchissante (311d).

**13.** Lentille (31) selon la revendication 12, dans laquelle une distance focale de la première lentille (311) est LEF1, une distance focale du second groupe de lentilles (312) est LEF2, et une distance focale effective de la lentille (31) est f ; et

un rapport de LEF1 sur LEF2 est supérieur à -5,5 et inférieur à -2 ; et/ou
un rapport de LEF1 sur f est supérieur à 0,35 et inférieur à 0,6 ; et/ou
un rapport de LEF2 sur f est supérieur à -0,25 et inférieur à 0.

**14.** Lentille (31) selon la revendication 12 ou 13, dans laquelle la lentille (31) a un plan image, une distance depuis la surface côté objet de la première lentille (311) jusqu'au plan image sur l'axe optique (O) est TTL, la distance focale effective de la lentille est f, et un rapport de TTL sur f est supérieur ou égal à 0,3 et inférieur ou égal à 0,5.

FIG. 1

FIG. 2

FIG. 3

40

41

30

Computing
control unit

FIG. 4

311

31

312a

312b

312c

F2

M

312d

F1

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

**EP 4 459 353 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211009673
- WO 2021261615 A1
- CN 108254859 A
- US 3700310 A